# FASCICULE DE BREVET EUROPEEN

(11) **EP 2 914 823 B1**
(45) Date de publication et mention de la délivrance du brevet: **14.12.2016**
(21) Numéro de dépôt: 13782709.3
(22) Date de dépôt: 24.10.2013
(51) Int. Cl.: F01N 5/02

(54) **PROCEDE DE PILOTAGE D'UN SYSTEME DE RECUPERATION D'ENERGIE D'UNE LIGNE D'ECHAPPEMENT D'UN MOTEUR DE VEHICULE AUTOMOBILE**
VERFAHREN ZUR KONTROLLE EINES ENERGIERÜCKGEWINNUNGSSYSTEMS EINER ABGASLEITUNG EINES KRAFTFAHRZEUGMOTORS
METHOD FOR CONTROLLING AN ENERGY RECOVERY SYSTEM OF AN EXHAUST LINE OF A MOTOR VEHICLE ENGINE

(30) Priorité: 30.10.2012 FR 1202921
(43) Date de publication de la demande: 09.09.2015
(73) Titulaire: Renault S.A.S., 92100 Boulogne-Billancourt (FR)
(72) Inventeur: JACQUOT, Laurent, F-75015 Paris (FR); QUECHON, Nicolas, F-91390 Morsang Sur Orge (FR); SHONDA, Osoko, F-93330 Neuilly Sur Marne (FR)
(86) Numéro de dépôt international: PCT/EP2013/072220
(87) Numéro de publication internationale: WO 2014/067835

(56) Documents cités:
- US-A1- 2011 067 389

## Description

### DOMAINE TECHNIQUE AUQUEL SE RAPPORTE L'INVENTION

La présente invention concerne de manière générale le domaine de la récupération d'énergie sur les véhicules automobiles.

Elle concerne en particulier un procédé de pilotage d'un système de récupération d'énergie d'une ligne d'échappement d'un moteur de véhicule automobile.

### ARRIERE-PLAN TECHNOLOGIQUE

Les gaz d'échappement circulant dans la ligne d'échappement d'un véhicule automobile sont chauds, en particulier en aval des dispositifs de traitement utilisés pour la dépollution de ces gaz d'échappement.

Des véhicules automobiles connus utilisent alors un système de récupération d'énergie disposé sur la ligne d'échappement du véhicule pour récupérer au moins une partie de l'énergie thermique de ces gaz d'échappement.

Le passage des gaz d'échappement dans le système de récupération est alors commandé par l'orientation d'une vanne disposée dans le conduit d'échappement de la ligne d'échappement.

Le document US 2011/0067389 décrit un procédé de pilotage d'un tel système de récupération d'énergie. Selon ce document, la température, la charge et le régime du moteur sont pris en compte pour actionner cette vanne et la placer dans une position permettant la récupération de la chaleur des gaz d'échappement.

Cependant, ce procédé présente l'inconvénient d'ignorer l'impact du système de récupération d'énergie sur le fonctionnement à chaud du moteur, et donc sur la consommation de carburant, en parallèle du gain de consommation apporté par ce système.

En effet, l'ajout d'un système de récupération d'énergie à l'échappement d'un moteur implique une augmentation de la contre-pression à l'échappement à l'origine d'une surconsommation de carburant.

En conséquence, le procédé de pilotage du document US 2011/0067389 ne permet pas d'assurer un gain de consommation de carburant tout en maintenant les performances du moteur du véhicule automobile dans toutes les conditions de fonctionnement du moteur.

### OBJET DE L'INVENTION

Afin de remédier à l'inconvénient précité de l'état de la technique, la présente invention propose un procédé de pilotage d'un système de récupération d'énergie d'une ligne d'échappement d'un moteur de véhicule automobile permettant de maximiser la récupération de l'énergie thermique des gaz d'échappement circulant dans cette ligne d'échappement, tout en minimisant la perte de charge associée au système de récupération.

Plus particulièrement, on propose selon l'invention un procédé de pilotage d'un système de récupération d'énergie d'une ligne d'échappement d'un moteur de véhicule automobile permettant de réaliser un gain de consommation de carburant G*récup,* ce système de récupération d'énergie comportant un conduit de dérivation piqué, à ses deux extrémités, sur un conduit d'échappement de ladite ligne d'échappement du moteur et comprenant un échangeur de chaleur, et une vanne de dérivation disposée dans ledit conduit d'échappement, en entrée dudit conduit de dérivation, ladite vanne de dérivation étant adaptée à prendre différentes positions dans ledit conduit d'échappement, ce système de récupération d'énergie induisant, pour une position donnée de la vanne de dérivation, une contre-pression à l'échappement CPE dans le conduit d'échappement qui entraîne une surconsommation de carburant S*conso* par le moteur dudit véhicule automobile, ledit procédé de pilotage comportant les étapes suivantes :
a) déterminer, à l'instant t, des valeurs du débit de carburant injecté Q*carb*(t) dans ledit moteur, du débit d'air admis Q*air*(t) dans ledit moteur, de la température des gaz d'échappement T*éch*(t), et du débit des gaz d'échappement Q*éch*(t) circulant dans ledit conduit d'échappement ;
b) déterminer, à l'instant t, une position optimale de ladite vanne de dérivation en fonction :
   - du gain de consommation de carburant G*récup,* réalisé grâce au système de récupération d'énergie, correspondant aux valeurs de la température des gaz d'échappement *Téch(t)* et du débit des gaz d'échappement Q*éch*(t) déterminées à l'étape a), et
   - de la surconsommation de carburant S*conso,* liée à la mise en oeuvre du système de récupération d'énergie pour ladite position optimale de la vanne de dérivation, correspondant aux valeurs du débit de carburant injecté Q*carb*(t), du débit d'air admis Q*air*(t), de la température des gaz d'échappement T*éch*(t) déterminées à l'étape a) et à la position optimale de la vanne de dérivation,
c) positionner ladite vanne de dérivation dans ladite position optimale déterminée à l'étape b).

En d'autres termes, à l'étape b), la surconsommation de carburant S*conso* correspond aux valeurs du débit de carburant injecté Q*carb*(t), du débit d'air admis Q*air*(t), de la température des gaz d'échappement T*éch*(t) déterminées à l'étape a) et à la valeur de la contre-pression à l'échappement CPE engendrée par le système de récupération d'énergie lorsque la vanne de dérivation est dans ladite position optimale.

Le procédé de pilotage selon l'invention tient ainsi compte de la perte de charge introduite par l'ajout d'un système de récupération d'énergie sur la ligne d'échappement du véhicule automobile.

Le potentiel de récupération d'énergie, c'est-à-dire le gain de consommation de carburant G*récup via* le système de récupération d'énergie est important lorsque le moteur du véhicule automobile fonctionne dans des conditions de forte charge. Or, ces conditions de fonctionnement du moteur se caractérisent par un débit des gaz d'échappement Q*éch* très élevé entraînant une augmentation considérable de l'effet de la contre-pression à l'échappement CPE. Ceci a pour effet d'imposer une surconsommation de carburant S*conso* pour maintenir les performances du moteur.

Cette surconsommation de carburant limite évidemment l'économie de carburant réalisée grâce à l'utilisation du système de récupération d'énergie, voire peut devenir plus importante que cette économie.

Le procédé de pilotage selon l'invention permet de trouver, à chaque instant t, la position optimale de la vanne de dérivation, correspondant à un fonctionnement optimal du moteur, pour lequel la surconsommation de carburant S*conso* induite par la contre-pression à l'échappement CPE est inférieure au gain de consommation de carburant G*récup.*

Dans un mode de réalisation particulièrement avantageux, à l'étape b) du procédé de pilotage, on réalise les sous-étapes suivantes :
b1) on compare à l'instant t :
   - la différence de débit de carburant injecté ΔQ*carb*(t) entre le débit de carburant injecté Q*carb*(t) déterminé à l'instant t et le débit de carburant Q*carb*(t-Δt) déterminé à un instant précédent t-Δt avec une valeur seuil de différence de débit de carburant injecté ΔQ*carb*ₛₑᵤᵢₗ prédéterminée, et/ou
   - le débit des gaz d'échappement Q*éch*(t) avec une valeur seuil de débit des gaz d'échappement Q*éch*ₛₑᵤᵢₗ prédéterminée, et/ou
   - le débit des gaz d'échappement Q*éch*(t) avec une valeur maximale de débit des gaz d'échappement Q*éch*ₘₐₓ prédéterminée, et/ou
   - la température des gaz d'échappement T*éch*(t) avec une valeur maximale de température des gaz d'échappement T*éch*ₘₐₓ prédéterminée, et
b2) on détermine ladite position optimale de la vanne de dérivation en fonction du résultat de la comparaison de la sous-étape b1).
   Grâce à ces comparaisons, on vérifie que les conditions de fonctionnement du moteur du véhicule sont propices à une récupération d'énergie par le système de récupération d'énergie avant de déterminer la position optimale de la vanne de dérivation.
   D'autres caractéristiques non limitatives et avantageuses du procédé de pilotage conforme à l'invention sont les suivantes :
   - ladite position optimale de la vanne de dérivation déterminée à la sous-étape b2) est une position ouverte dans laquelle les gaz d'échappement sont entièrement acheminés vers le conduit d'échappement, si le résultat de la comparaison de la sous-étape b1) montre qu'au moins une des conditions suivantes est vérifiée à l'instant t :
      - la différence de débit de carburant injecté ΔQ*carb*(t) est supérieure à ladite valeur seuil de différence de débit de carburant injecté ΔQ*carb*ₛₑᵤᵢₗ, et le débit des gaz d'échappement Q*éch*(t) est supérieur à ladite valeur seuil de débit des gaz d'échappement Q*éch*ₛₑᵤᵢₗ,
      - le débit des gaz d'échappement Q*éch*(t) est inférieur à ladite valeur seuil de débit des gaz d'échappement Q*éch*ₛₑᵤᵢₗ,
      - le débit des gaz d'échappement Q*éch*(t) est supérieur à ladite valeur maximale de débit des gaz d'échappement Q*éch*ₘₐₓ,
      - la température des gaz d'échappement T*éch*(t) est supérieure à ladite valeur maximale de température des gaz d'échappement T*éch*ₘₐₓ ;
   - à l'étape a), le débit des gaz d'échappement Q*éch*(t) est déterminé à partir dudit débit de carburant injecté Q*carb*(t) et dudit débit d'air admis Q*air*(t) ;
   - à l'étape b), on réalise une sous-étape de comparaison du gain de consommation de carburant G*récup* avec la surconsommation de carburant S*conso ;*
   - à l'étape b), on réalise les sous-étapes suivantes :
b3) on détermine, pour une position fermée de la vanne dérivation, dans laquelle les gaz d'échappement sont entièrement acheminés vers le conduit de dérivation, une surconsommation maximale de carburant S*conso*_{CPEmax} et un gain maximal de consommation de carburant G*récup*_{CPEmax} pour cette position fermée de la vanne de dérivation,
b4) on compare la surconsommation maximale de carburant S*conso*_{CPEmax} avec le gain maximal de consommation de carburant G*récup*_{CPEmax}, et
b5) on détermine la position optimale de la vanne de dérivation comme étant la position fermée lorsque le résultat de la comparaison précédente montre que la surconsommation maximale de carburant S*conso*_{CPEmax} est inférieure au gain maximal de consommation de carburant G*récup*_{CPEmax} pour cette position fermée de la vanne de dérivation ;
   - à la sous-étape b5), lorsque la surconsommation maximale de carburant S*conso*_{CPEmax} imposée par la vanne de dérivation dans sa position fermée est supérieure au gain maximal de consommation de carburant G*récup*_{CPEmax} pour la position fermée de la vanne de dérivation, on réalise les sous-étapes suivantes :
b6) on détermine :
   - une première surconsommation de carburant S*conso*_{CPE0}, correspondant à une première position de la vanne de dérivation, cette première surconsommation de carburant S*conso*_{CPE0} étant égale au gain maximal de consommation de carburant G*récup*_{CPEmax} correspondant à la position fermée de la vanne de dérivation,
   - une deuxième surconsommation de carburant S*conso*_{CPE0/2} correspondant à une deuxième position de la vanne de dérivation, pour laquelle la part des gaz d'échappement acheminée vers le conduit de dérivation est inférieure à la part des gaz d'échappement acheminée vers ce conduit de dérivation lorsque la vanne de dérivation est dans ladite première position, et
   - un deuxième gain de consommation de carburant G*récup*_{CPE0/2} obtenu pour cette deuxième position de la vanne de dérivation,
b7) on compare la deuxième surconsommation de carburant S*conso*_{CPE0/2} avec le deuxième gain de consommation de carburant G*récup*_{CPE0/2}, et
b8) on détermine la position optimale de la vanne de dérivation en fonction du résultat de la comparaison de la sous-étape b7) ;
   - à la sous-étape b8), la position optimale de la vanne de dérivation est déterminée comme étant la deuxième position lorsque, à la sous-étape b7), la comparaison montre que la deuxième surconsommation de carburant S*conso*_{CPE0/2} est inférieure au deuxième gain de consommation de carburant G*récup*_{CPE0/2} pour cette deuxième position de la vanne de dérivation ;
   - la comparaison de la sous-étape b7) ayant montré que la deuxième surconsommation de carburant S*conso*_{CPE0/2} est supérieure au deuxième gain de consommation de carburant G*récup*_{CPE0/2}, à la sous-étape b8), on réalise les sous-étapes suivantes :
b9) on détermine :
   - un premier gain net de consommation de carburant G*récup*_{CPE0} - S*conso*_{CPE0} qui est égal à la différence entre un premier gain de consommation de carburant G*récup*_{CPE0}, obtenu lorsque la vanne de dérivation est dans sa première position, et ladite première surconsommation de carburant S*conso*_{CPE0} imposée par la vanne de dérivation dans cette première position, et
   - un deuxième gain net de consommation de carburant G*récup*_{CPE0/2} - S*conso*_{CPE0/2} qui est égal à la différence entre le deuxième gain de consommation de carburant G*récup*_{CPE0/2} et la deuxième surconsommation de carburant S*conso*_{CPE0/2},
b10) on compare le premier gain net de consommation de carburant G*récup*_{CPE0} - S*conso*_{CPE0} avec le deuxième gain net de consommation de carburant G*récup*_{CPE0/2} - S*conso*_{CPE0/2}, et
b11) on détermine la position optimale de la vanne de dérivation en fonction de la comparaison de la sous-étape b10) ;
   - à la sous-étape b11) la position optimale de la vanne de dérivation est déterminée comme étant la deuxième position lorsque, à la sous-étape b10), la comparaison montre que le premier gain net de consommation de carburant G*récup*_{CPE0} - S*conso*_{CPE0} est inférieur au deuxième gain net de consommation de carburant G*récup*_{CPE0/2} - S*conso*_{CPE0/2} ;
   - la comparaison de la sous-étape b10) ayant montré que le premier gain net de consommation de carburant G*récup*_{CPE0} - S*conso*_{CPE0} est supérieur au deuxième gain net de consommation de carburant G*récup*c_{CPE0/2} - S*conso*_{CPE0/2}, on réalise les sous-étapes suivantes :
b12) on détermine :
   - une troisième surconsommation de carburant S*conso*_{3*CPE0/2} correspondant à une troisième position de la vanne de dérivation, pour laquelle la part des gaz d'échappement acheminée vers le conduit de dérivation est supérieure à la part des gaz d'échappement acheminée vers ce conduit de dérivation lorsque la vanne de dérivation est dans ladite première position,
   - un troisième gain de consommation de carburant G*récup*_{3*CPE0/2} obtenu pour cette troisième position de la vanne de dérivation, et
   - un troisième gain net de consommation de carburant G*récup*_{3*CPE0/2} - S*conso*_{3*CPE0/2} qui est égal à la différence entre le troisième gain de consommation de carburant G*récup*_{3*CPE0/2} et la troisième surconsommation de carburant S*conso*_{3*CPE0/2,}
b13) on compare le premier gain net de consommation de carburant G*récup*_{CPE0} - S*conso*_{CPE0} avec le troisième gain net de consommation de carburant G*récup*_{3*CPE0/2} - S*conso*_{3*CPE0/2}, et
b14) on détermine la position optimale en fonction de la comparaison précédente de telle sorte que :
   - lorsque le premier gain net de consommation de carburant G*récup*_{CPE0} - S*conso*_{CPE0} est inférieur au troisième gain net de consommation de carburant G*récup*_{*3**CPE0/2} *-* S*conso*_{*3**CPE0/2}*,* alors la position optimale de la vanne de dérivation est ladite troisième position, et
   - lorsque le premier gain net de consommation de carburant G*récup*c_{CPE0} - S*conso*_{CPE0} est supérieur au troisième gain net de consommation de carburant G*récup*_{*3**CPE0/2} - S*conso*_{*3**CPE0/2}, alors la position optimale de la vanne de dérivation est ladite première position ;
   - à l'étape b), on détermine à l'instant t ladite position optimale de la vanne de dérivation en fonction de la température T*éch*(t) et du débit Q*éch*(t) des gaz d'échappement selon une cartographie prédéfinie donnant, pour chaque couple de valeurs de la température T*éch*(t) et du débit Q*éch*(t) des gaz d'échappement appartenant à une plage de température et à une plage de débit données, la position optimale de la vanne de dérivation prédéterminée correspondante.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique d'un moteur de véhicule automobile comprenant un système de récupération d'énergie ;
- la figure 2 est un diagramme schématique d'un premier mode de réalisation du procédé de pilotage ;
- la figure 3 est un diagramme schématique d'un deuxième mode de réalisation du procédé de pilotage ;
- la figure 4 est une représentation schématique de courbes de la surconsommation de carburant et du gain de consommation en carburant en fonction de la contre-pression à l'échappement dans des conditions de fonctionnement du moteur dans lesquelles la récupération d'énergie est valorisable dans le cas d'une vanne de dérivation en position fermée ;
- la figure 5 est une représentation schématique de courbes de la surconsommation de carburant et du gain de consommation en carburant en fonction de la contre-pression à l'échappement dans des conditions de fonctionnement du moteur dans lesquelles la récupération d'énergie n'est pas valorisable ;
- la figure 6 est une représentation schématique de courbes de la surconsommation de carburant et du gain de consommation en carburant en fonction de la contre-pression à l'échappement dans des conditions de fonctionnement du moteur dans lesquelles la récupération d'énergie est valorisable ;
- la figure 7 est un diagramme schématique d'une variante du deuxième mode de réalisation du procédé de la figure 3 ;
- la figure 8 est une représentation schématique d'une cartographie des positions optimales de la vanne de dérivation en fonction des valeurs de la température et du débit des gaz d'échappement ;
- la figure 9 représente un diagramme schématique d'un troisième mode de réalisation du procédé de pilotage dans lequel la position optimale est déterminée en fonction de la cartographie de la figure 8.

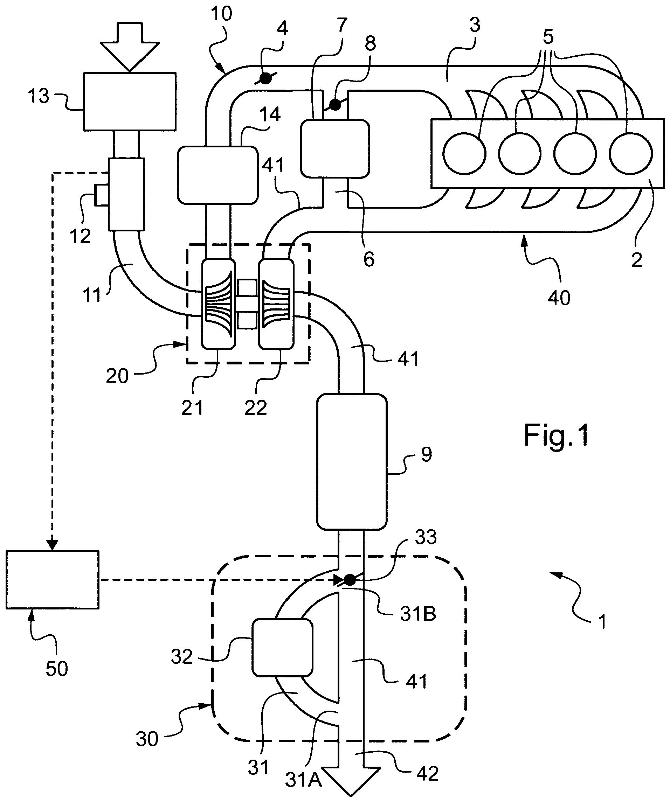

On a représenté sur la figure 1 un moteur 1 à combustion interne suralimenté comportant une chambre de combustion 2 alimentée en air frais par une ligne d'admission 10 et débouchant en aval sur une ligne d'échappement 40.

La ligne d'admission 10 comporte un conduit d'admission 11 dans lequel circule de l'air frais. Le débit d'air admis Q*air* est mesuré en entrée du conduit d'admission 11 par un débitmètre d'air 12. L'air frais admis dans le conduit d'admission 11 est filtré en entrée du moteur 1 par un filtre à air 13.

Le moteur 1 comprend par ailleurs un turbocompresseur 20 comportant un compresseur 21 et une turbine 22. La turbine 22 est placée dans un conduit d'échappement 41 de la ligne d'échappement 40 et entraîne le compresseur 21 placé dans le conduit d'admission 11 afin de comprimer l'air frais y circulant.

Cette compression ayant pour effet de réchauffer l'air, il est prévu sur le trajet du conduit d'admission 11, un premier refroidisseur d'air 14 qui refroidit l'air en sortie du compresseur 21 du turbocompresseur 20.

Le conduit d'admission 11 débouche dans un répartiteur 3. Il comporte, en amont de ce répartiteur 3, un volet d'admission 4. L'orientation du volet d'admission 4 par rapport à l'axe du conduit d'admission 11 pilote le débit d'air entrant dans le répartiteur 3.

L'air admis en aval du volet d'admission 4 se répartit dans les différents cylindres 5 de la chambre de combustion 2.

Après combustion d'un mélange composé de l'air admis et d'un carburant injecté dans la chambre de combustion 2, les gaz d'échappement sont acheminés hors de la chambre de combustion 2 dans le conduit d'échappement 41 de la ligne d'échappement 40, pour être évacués au bout de la ligne d'échappement 40 par le pot d'échappement 42.

Une partie de ces gaz d'échappement est prélevée par un conduit de recirculation 6 qui les ramène, après passage par un deuxième refroidisseur d'air 7, au répartiteur 3 où ils se mélangent à l'air frais arrivant du conduit d'admission 11.

L'apport de gaz d'échappement dans le répartiteur 3 est régulé par une vanne de recirculation 8 appelée vanne EGR (pour « *Exhaust Gaz Recirculation* » en anglais).

Les gaz d'échappement qui ne sont pas dirigés dans le conduit de recirculation 6 circulent dans le conduit d'échappement 41 pour arriver à la turbine 22 du turbocompresseur 20. Ils traversent ensuite un ensemble de dispositifs de post-traitement 9 placés sur le trajet de la ligne d'échappement 40, avant d'être libérés dans l'atmosphère. Cet ensemble de dispositifs de post-traitement 9 des gaz d'échappement comporte par exemple un catalyseur d'oxydation, un filtre à particules et un dispositif de réduction sélective des oxydes d'azote.

En aval de l'ensemble des dispositifs de post-traitement 9, le moteur 1 comporte un système de récupération d'énergie 30 destiné ici à récupérer au moins une partie de l'énergie thermique des gaz d'échappement.

Le système de récupération d'énergie 30 comporte tout d'abord un conduit de dérivation 31 qui est piqué, à ses deux extrémités 31 A, 31 B sur le conduit d'échappement 41 de la ligne d'échappement 40 du moteur 1, en aval de l'ensemble des dispositifs de post-traitement 9.

Le système de récupération d'énergie 30 comporte également un échangeur de chaleur 32 disposé sur le trajet du conduit de dérivation 31, entre son extrémité d'entrée 31 B et son extrémité de sortie 31 A.

Lorsque l'échangeur de chaleur 32 est traversé par des gaz chauds, celui-ci récupère une partie de l'énergie thermique de ces gaz chauds pour la transformer en énergie mécanique ou électrique.

L'échangeur de chaleur 32 est ici un dispositif thermoélectrique qui convertit l'énergie thermique en énergie électrique par effet Seebeck.

En variante, l'échangeur de chaleur 32 peut être une machine thermodynamique fonctionnant selon un cycle thermodynamique de Stirling ou de Rankine qui récupère l'énergie thermique des gaz chauds pour porter un fluide à haute température et qui, par un cycle de compressions/détentes, transforme cette énergie thermique en énergie mécanique.

Le système de récupération d'énergie 30 comporte enfin une vanne de dérivation 33 disposée dans le conduit d'échappement 41, en entrée du conduit de dérivation 31, au niveau de son extrémité d'entrée 31 B.

Cette vanne de dérivation 33 comprend un port d'entrée connecté fluidiquement au conduit d'échappement 41, en aval de l'ensemble des dispositifs de post-traitement 9. Ainsi, en entrée de la vanne de dérivation 33, sont admis les gaz d'échappement sortant des dispositifs de post-traitement 9.

Des capteurs, physiques ou logiciels, déterminent, en entrée du système de récupération d'énergie 30, la température T*éch,* en degrés Celsius (°C), et le débit Q*éch*, en gramme par seconde (g/s), dans le conduit d'échappement 41, de ces gaz d'échappement.

Lors du fonctionnement du moteur 1, la température T*éch* des gaz d'échappement dans le conduit d'échappement 41, en aval des dispositifs de post-traitement 9, est généralement comprise entre 100°C et 800°C et leur débit Q*éch* dans le conduit d'échappement 41 est compris entre 2,5 g/s et 180 g/s.

La vanne de dérivation 33 comprend en outre ici deux ports de sortie, l'un débouchant sur le conduit d'échappement 41 et l'autre sur le conduit de dérivation 31.

Les gaz d'échappement acheminés par le conduit d'échappement 41 vers l'entrée de la vanne de dérivation 33 peuvent ainsi être dirigés, en partie ou en totalité, en sortie de la vanne de dérivation 33, vers le conduit de dérivation 31 et/ou vers le conduit d'échappement 41.

La vanne de dérivation 33 peut en effet prendre différentes positions dans ledit conduit d'échappement 41 afin de réguler la part des gaz d'échappement dirigée vers le conduit de dérivation 31 et/ou vers le conduit d'échappement 41, en aval de cette vanne de dérivation 33.

La position de la vanne de dérivation 33 est pilotée par une unité de commande électronique et informatique 50 du véhicule automobile, qui reçoit par ailleurs les informations provenant des différents capteurs de débit, de température, et de pression du moteur 1.

Pour cela, la vanne de dérivation 33 comporte un actionneur (non représenté) qui est commandé par l'unité de commande électronique et informatique 50.

On considérera dans la suite de la description que :
- les gaz d'échappement sont entièrement acheminés vers le conduit d'échappement 41 par la vanne de dérivation 33 lorsque celle-ci est en position ouverte, et
- les gaz d'échappement sont entièrement acheminés vers le conduit de dérivation 31 par la vanne de dérivation 33 lorsque celle-ci est en position fermée.

Lorsque tout ou partie des gaz d'échappement sont acheminés vers le conduit de dérivation 31, ceux-ci traversent l'échangeur de chaleur 32 qui récupère l'énergie thermique des gaz d'échappement pour la transformer ici en énergie électrique. Cette énergie électrique est alors utilisée par des dispositifs du véhicule nécessitant une alimentation électrique comme par exemple l'éclairage intérieur ou extérieur, l'électronique et l'ordinateur de bord ou les systèmes audio.

En utilisant cette énergie électrique générée à partir du système de récupération d'énergie 30, le véhicule utilise moins d'énergie électrique fournie par l'alternateur, dont le fonctionnement augmente la consommation du véhicule en carburant.

Ainsi, l'utilisation du système de récupération d'énergie 30 permet de réaliser un gain de consommation de carburant G*récup* en litre par 100 km parcourus (I/100 km).

Par ailleurs, le fonctionnement du système de récupération d'énergie 30 entraîne aussi une surconsommation de carburant S*conso* (en I/100 km) par le moteur 1.

En effet, le système de récupération d'énergie 30 induit entre autres, pour une position donnée de la vanne de dérivation 33, une contre-pression à l'échappement CPE dans le conduit d'échappement 41.

La contre-pression à l'échappement CPE correspond à la pression régnant dans le conduit d'échappement 41 à la sortie des dispositifs de post-traitement 9, en aval du système de récupération d'énergie 30.

Cette contre-pression à l'échappement CPE est due au fait que le système de récupération d'énergie 30, en particulier sa vanne de dérivation 33, constitue un obstacle sur le trajet de l'écoulement des gaz d'échappement jusqu'au pot d'échappement 42.

La contre-pression à l'échappement CPE dépend donc de la position de la vanne de dérivation 33 dans le conduit d'échappement 41.

La perte de charge associée à la vanne de dérivation 33, c'est-à-dire la différence de pression entre l'amont du système de récupération d'énergie 30, au niveau de l'entrée de la vanne de dérivation 33, et l'aval du système de récupération d'énergie 30, au niveau du pot d'échappement 42, entraîne une augmentation importante de la pression dans le conduit d'échappement 41 en amont de la turbine 22.

Compte tenu du rapport de détente du turbocompresseur 20 et de la perte de charge associée, ceci a pour conséquence une augmentation du pompage du moteur 1 et donc une réduction de ses performances. Pour compenser cette diminution de performance, l'unité de commande électronique et informatique 50 est programmée pour injecter plus de carburant dans la chambre de combustion 2 de manière à compenser ces pertes supplémentaires.

Ceci n'est possible que si la pression de suralimentation peut également être augmentée afin de rester dans des proportions d'air et de carburant acceptables dans la chambre de combustion 2.

Les performances du moteur 1 sont alors maintenues au prix d'une surconsommation de carburant.

Si la pression de suralimentation ne peut être augmentée pour maintenir les proportions d'air et de carburant acceptables dans la chambre de combustion 2, la contre-pression à l'échappement CPE due au système de récupération d'énergie 30 entraîne une perte de performances globales du moteur 1.

Cette contre-pression à l'échappement CPE doit donc être limitée pour éviter de réduire fortement les performances du moteur 1.

Ici, l'unité de commande électronique et informatique 50 du véhicule est programmée pour mettre en oeuvre le procédé de pilotage du système de récupération d'énergie 30, de manière soit à contrôler la contre-pression à l'échappement CPE pour maintenir les performances du moteur 1 et fournir un gain de consommation de carburant G*récup* qui est supérieur à la surconsommation de carburant S*conso* induite par cette contre-pression à l'échappement CPE, soit à désactiver ce système de récupération d'énergie 30 lorsque cet objectif ne peut être atteint.

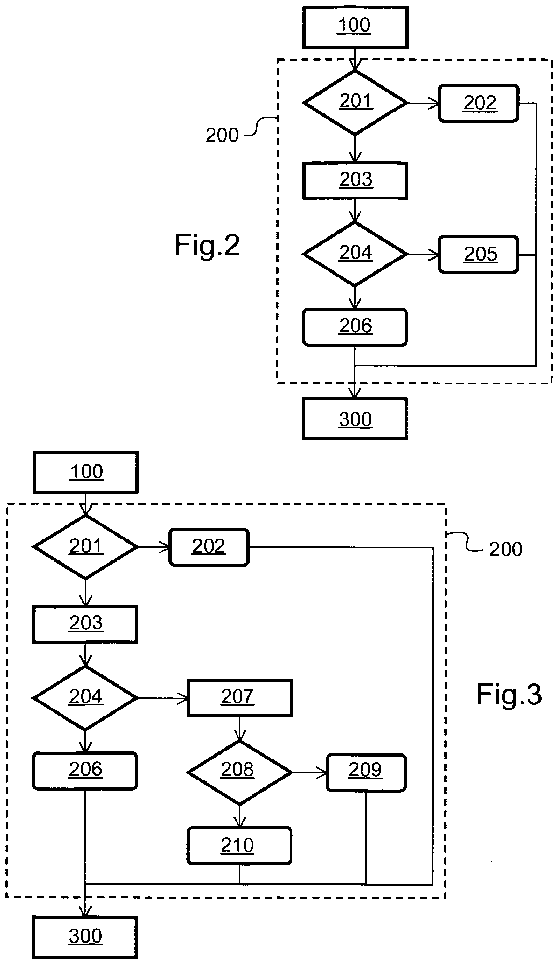

Les figures 2, 3, 7 et 9 représentent des diagrammes schématiques correspondant à trois modes de réalisation différents du procédé de pilotage selon l'invention.

Dans une première étape du procédé de pilotage, commune aux trois modes de réalisation, référencée étape a) 100 (voir figures 2, 3, 7 et 9), l'unité de commande électronique et informatique 50 détermine à partir des informations reçues de la part des différents capteurs du moteur 1, à un instant t, des valeurs représentatives des conditions de fonctionnement du moteur 1. Ces valeurs représentatives sont ici :
- le débit de carburant injecté Q*carb*(t) dans le moteur 1 estimé ou mesuré par un débitmètre (non représenté) situé au niveau des injecteurs de carburant dans la chambre de combustion 2,
- le débit d'air admis Q*air*(t) dans le moteur 1 mesuré par le débitmètre d'air 12,
- la température des gaz d'échappement T*éch*(t) estimée ou mesurée en sortie des dispositifs de post-traitement 9 au moyen d'un thermocouple situé dans le conduit d'échappement 41, et
- le débit des gaz d'échappement Q*éch*(t) estimé ou mesuré en sortie des dispositifs de post-traitement 9 au moyen d'un débitmètre (non représenté) placé sur le conduit d'échappement 41, en amont du système de récupération d'énergie 30.

Ainsi, une ou plusieurs de ces valeurs représentatives de fonctionnement du moteur 1 peuvent être déterminées par un calcul.

Dans une deuxième étape du procédé de pilotage selon l'invention, référencée étape b) 200 et représentée en pointillés sur les figures 2, 3, 7 et 9, l'unité de commande électronique et informatique 50 détermine, à l'instant t, une position optimale de la vanne de dérivation 33 en fonction :
- du gain de consommation de carburant G*récup* réalisé grâce au système de récupération d'énergie 30, correspondant, d'une part, aux valeurs de la température des gaz d'échappement T*éch*(t) et du débit des gaz d'échappement Q*éch*(t) déterminées à l'étape a), et, d'autre part, à la valeur de la contre-pression à l'échappement CPE engendrée par le système de récupération d'énergie 30 lorsque la vanne de dérivation 33 est dans sa position optimale, et
- de la surconsommation de carburant S*conso* lié à la mise en oeuvre du système de récupération d'énergie 30 pour ladite position optimale de la vanne de dérivation 33, correspondant plus précisément aux valeurs du débit de carburant injecté Q*carb*(t), du débit d'air admis Q*air*(t), de la température des gaz d'échappement T*éch*(t) déterminées à l'étape a) et à la valeur de la contre-pression à l'échappement CPE engendrée par le système de récupération d'énergie 30 lorsque la vanne de dérivation 33 est dans cette position optimale.

En d'autres termes, la surconsommation de carburant est déterminée en fonction de la position optimale de la vanne de dérivation 33 envisagée.

Enfin, dans une troisième et dernière étape du procédé de pilotage, référencée étape c) 300 (voir figures 2, 3, 7 et 9), l'unité de commande électronique et informatique 50 commande l'actionneur de la vanne de dérivation 33 de manière à positionner celle-ci sur la position optimale déterminée à l'étape b).

L'étape b) 200 du procédé de pilotage selon l'invention va maintenant être décrite plus en détail.

Comme expliqué précédemment, à une position donnée de la vanne de dérivation 33 correspond une contre-pression à l'échappement CPE donnée.

En particulier, lorsque la vanne de dérivation 33 est dans sa position ouverte, c'est-à-dire lorsque les gaz d'échappement sont exclusivement acheminés vers le conduit d'échappement 41, l'obstacle constitué par le système de récupération d'énergie 30 à l'écoulement des gaz d'échappement jusqu'au pot d'échappement 42 est moindre et la contre-pression à l'échappement CPE est minimale.

À l'inverse, lorsque la vanne de dérivation 33 est dans sa position fermée, c'est-à-dire lorsque les gaz d'échappement sont exclusivement acheminés vers le conduit de dérivation 31, l'obstacle constitué par le système de récupération d'énergie 30 à l'écoulement des gaz d'échappement jusqu'au pot d'échappement 42 est plus important et la contre-pression à l'échappement CPE est égale à la contre-pression à l'échappement maximale CPEₘₐₓ.

Le gain de consommation de carburant G*récup*(t) à l'instant t, dépend généralement :
- de la température des gaz d'échappement T*éch*(t),
- du débit des gaz d'échappement Q*éch*(t), et
- de la contre-pression à l'échappement CPE.

Cette dépendance peut être déterminée :
- soit par simulation numérique en modélisant le moteur 1 du véhicule automobile et le système de récupération d'énergie 30 associé,
- soit empiriquement en mesurant pour chaque triplet de valeurs (Q*éch*(t), T*éch*(t), CPE) le gain de consommation de carburant *Grécup(t)* obtenu à l'instant t pour la position de la vanne de dérivation 33 qui entraîne cette contre-pression à l'échappement CPE.

De la même manière, la surconsommation de carburant S*conso(t),* à l'instant t, dépend :
- du débit de carburant injecté Q*carb*(t),
- du débit d'air admis Q*air*(t),
- de la température des gaz d'échappement T*éch*(t), et
- de la valeur de la contre-pression à l'échappement CPE.

Comme pour le gain de consommation de carburant G*récup*(t), la dépendance de la surconsommation de carburant S*conso(t)* aux variables listées ci-dessus peut être déterminée soit théoriquement par simulation, soit empiriquement par mesure sur un moteur-modèle représentatif du fonctionnement du moteur 1.

Lorsque les valeurs représentatives Q*carb,* Q*air,* Q*éch,* T*éch* du régime moteur déterminées à l'étape a) 100 sont fixées, alors le gain de consommation de carburant G*récup*(t) et la surconsommation de carburant Sconso(t) varient en fonction de la contre-pression à l'échappement CPE, et donc en fonction de la position de la vanne de dérivation 33 dans le circuit du système de récupération d'énergie 30.

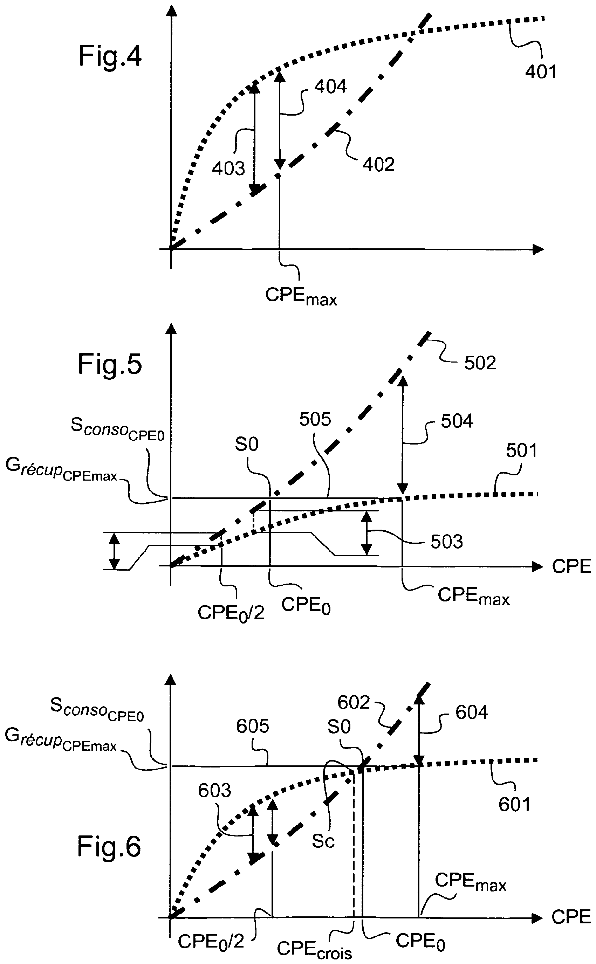

On a représenté, sur les figures 4 à 6, des exemples de courbes représentant en fonction de la contre-pression à l'échappement CPE :
- le gain de consommation de carburant G*récup*(t) 401, 501, 601, et
- la surconsommation de carburant S*conso*(t) 402, 502, 602.

Dans la suite de la description, on définira un gain net de consommation de carburant G*récup(t) -* S*conso(t)* à l'instant t comme étant égal à la différence entre le gain de consommation de carburant G*récup*(t) à l'instant t et la surconsommation de carburant S*conso(t)* à l'instant t.

Selon le régime moteur et selon les caractéristiques du moteur 1 en fonctionnement, on constate, sur les figures 4 et 6, qu'il existe une ou plusieurs valeurs, voire une plage de valeurs, de la contre-pression à l'échappement CPE pour laquelle le système de récupération d'énergie 30 est intéressant, c'est-à-dire fournit un gain net de consommation de carburant G*récup(t) -* S*conso(t)* 403, 603 qui est positif.

On considérera que la récupération d'énergie par le système de récupération d'énergie 30 est :
- « valorisable » lorsque le gain net de consommation de carburant G*récup(t) -* S*conso(t)* est positif, et
- « non valorisable » lorsque le gain net de consommation de carburant G*récup*(t) *-* S*conso(t)* est négatif.

Dans l'exemple représenté sur la figure 4, le gain net de consommation de carburant G*récup(t)* - S*conso(t)* (référencé 404 sur la figure 4) pour la contre-pression à l'échappement maximale CPEₘₐₓ est positif, indiquant que, pour les conditions de fonctionnement correspondantes du moteur 1, la récupération d'énergie est valorisable lorsque la vanne de dérivation 33 est dans sa position fermée, qui correspond à la contre-pression à l'échappement maximale CPEₘₐₓ.

Dans l'exemple représenté sur les figures 5 et 6, la récupération d'énergie n'est pas valorisable dans les conditions de fonctionnement du moteur 1 correspondantes, lorsque la vanne de dérivation 33 est dans sa position fermée. En effet, le gain net de consommation de carburant G*récup*(t) *-* S*conso(t),* référencé 504 sur la figure 5 et 604 sur la figure 6, est négatif pour la contre-pression à l'échappement maximale CPEₘₐₓ.

Par ailleurs, on constate sur la figure 5 que la courbe représentant le gain de consommation de carburant G*récup(t)* 501 est en-dessous de la courbe représentant la surconsommation de carburant S*conso(t)* 502 quelle que soit la valeur de la contre-pression à l'échappement CPE. Ainsi, dans les conditions de fonctionnement du moteur 1 correspondant aux courbes de la figure 5, la récupération d'énergie n'est jamais valorisable, quelle que soit la position de la vanne de dérivation 33.

En revanche, sur la figure 6, on observe que la courbe représentant le gain de consommation de carburant G*récup*(t) 601 et la courbe représentant la surconsommation de carburant S*conso(t)* 602 se croisent au point de croisement Sc lorsque la contre-pression à l'échappement est égale à une contre-pression à l'échappement au croisement CPE_{crois}. Ainsi, dans les conditions de fonctionnement du moteur 1 correspondant aux courbes de la figure 6, la récupération d'énergie est :
- non valorisable lorsque la contre-pression à l'échappement CPE est supérieure à la contre-pression à l'échappement au croisement CPE_{crois}, et
- valorisable lorsque la contre-pression à l'échappement CPE est inférieure à la contre-pression à l'échappement au croisement CPE_{crois}.

Ainsi, on comprend que la position optimale de la vanne de dérivation 33 est la position de celle-ci qui fournit, à l'instant t, le gain net de consommation d'énergie G*récup*(t) *-* S*conso*(t) 403, 503, 603 le plus élevé.

De manière générale, lors de l'étape b), il s'agit donc de déterminer la position optimale de la vanne de dérivation 33 pour laquelle le système de récupération d'énergie 30 est mis en oeuvre de manière à ce que la surconsommation de carburant S*conso* induite par la contre-pression à l'échappement CPE soit inférieure au gain de consommation de carburant G*récup.*

Pour cela, selon l'invention, l'unité de commande électronique et informatique détermine, en fonction des paramètres moteur précédemment déterminés à l'étape a) (Q*carb,* Q*air,* T*éch,* Q*éch*) et éventuellement du régime moteur N (par exemple le nombre de tours par minute du moteur), la position optimale de la vanne de dérivation pour laquelle la contre-pression à l'échappement CPE associée à cette position optimale engendre la surconsommation de carburant S*conso* la plus faible possible tout en permettant un gain de consommation de carburant G*récup.*

En outre, la position optimale de la vanne de dérivation 33 est déterminée de sorte que les performances du moteur 1 soient préservées.

Ainsi, selon le procédé de pilotage selon l'invention, le système de récupération d'énergie 30 n'est mis en oeuvre que si son utilisation ne modifie pas les performances du véhicule automobile. Par conséquent, le procédé de pilotage empêche la récupération d'énergie dès qu'une demande de couple importante est détectée, et à partir d'un certain niveau de débit des gaz d'échappement Q*éch*(t).

Plus précisément, à cet effet, afin de déterminer cette position optimale, selon les trois modes de réalisation représentés sur les figures 2, 3, 7 et 9, à l'étape b) 200 du procédé de pilotage, l'unité de commande électronique et informatique 50 réalise une sous-étape de comparaison b1) 201.

Ainsi, à la sous-étape b1), l'unité de commande électronique et informatique 50 compare à l'instant t :
- la différence de débit de carburant injecté ΔQ*carb*(t) entre le débit de carburant injecté Q*carb*(t) déterminé à l'instant t et le débit de carburant Q*carb*(t-Δt) déterminé à un instant précédent t-Δt (Δt étant strictement positif) avec une valeur seuil de différence de débit de carburant injecté ΔQ*carb*ₛₑᵤᵢₗ prédéterminée,
- le débit des gaz d'échappement Q*éch*(t) avec une valeur seuil de débit des gaz d'échappement Q*éch*ₛₑᵤᵢₗ prédéterminée,
- le débit des gaz d'échappement Q*éch*(t) avec une valeur maximale de débit des gaz d'échappement Q*éch*ₘₐₓ prédéterminée,
- la température des gaz d'échappement T*éch*(t) avec une valeur maximale de température des gaz d'échappement *T*éch*ₘₐₓ* prédéterminée

L'unité de commande électronique et informatique 50 réalise ensuite une sous-étape b2), dans laquelle on détermine la position optimale de la vanne de dérivation 33 en fonction du résultat des comparaisons de la sous-étape b1).

En particulier, lorsque le résultat de la sous-étape b1) 201 montre qu'au moins une des conditions suivantes est vérifiée :
- la différence de débit de carburant injecté ΔQ*carb*(t) est supérieure à ladite valeur seuil de différence de débit de carburant injecté ΔQ*carb*ₛₑᵤᵢₗ*,* et le débit des gaz d'échappement Q*éch*(t) est supérieur à ladite valeur seuil de débit des gaz d'échappement Q*éch*ₛₑᵤᵢₗ,
- le débit des gaz d'échappement Q*éch*(t) est inférieur à ladite valeur seuil de débit des gaz d'échappement Q*éch*ₛₑᵤᵢₗ,
- le débit des gaz d'échappement Q*éch*(t) est supérieur à ladite valeur maximale de débit des gaz d'échappement Q*éch*ₘₐₓ,
- la température des gaz d'échappement T*éch(t)* est supérieure à ladite valeur maximale de température des gaz d'échappement T*éch*ₘₐₓ,
alors la position optimale de la vanne de dérivation 33 est déterminée (sous-étape b2) 202) comme étant la position ouverte dans laquelle les gaz d'échappement sont entièrement acheminés vers le conduit d'échappement 41 pour être évacués par le pot d'échappement 42.

En effet, une demande de couple est importante lorsque, dans les conditions de fonctionnement du moteur 1 :
- la différence de débit de carburant injecté ΔQ*carb*(t) entre le débit de carburant injecté Q*carb*(t) à l'instant t et le débit de carburant injecté Q*carb*(t-Δt) à l'instant précédent t-Δt est supérieure à une valeur seuil de différence de débit de carburant injecté ΔQ*carbₛₑᵤᵢₗ,* et
- le débit des gaz d'échappement Q*éch*(t) est supérieur à une valeur seuil de débit des gaz d'échappement Q*éch*ₛₑᵤᵢₗ.

La demande de couple se traduit, au niveau du moteur 1 du véhicule, par une augmentation du débit de carburant injecté Q*carb* dans le moteur 1. Ceci est par exemple le cas lorsque le véhicule se trouve dans une phase d'accélération. Les performances du véhicule seront donc dégradées lors d'une telle demande de couple lorsque le moteur 1 est en outre dans un régime élevé où le débit des gaz d'échappement Q*éch*(t) est supérieur à une valeur seuil de débit des gaz d'échappement Q*éch*ₛₑᵤᵢₗ, par exemple Q*éch*ₛₑᵤᵢₗ = 10 g/s.

Dans ces conditions, l'unité de commande électronique et informatique 50 désactive le système de récupération d'énergie 30 en empêchant le passage des gaz d'échappement dans l'échangeur de chaleur 32. La position optimale de la vanne de dérivation 33 déterminée est la position ouverte dans laquelle les gaz d'échappement sont entièrement acheminés dans le conduit d'échappement 41 et non dans le conduit de dérivation 31 du système de récupération d'énergie 30.

Par ailleurs, si le débit des gaz d'échappement Q*éch*(t) est trop faible, inférieur à la valeur seuil de débit des gaz d'échappement Q*éch*ₛₑᵤᵢₗ, il est inutile de récupérer de l'énergie thermique provenant des gaz d'échappement car trop peu de gaz d'échappement traverserait le système de récupération d'énergie 30.

Ainsi, l'unité de commande électronique et informatique 50 désactive le système de récupération d'énergie 30 lorsque le débit des gaz d'échappement Q*éch*(t) est inférieur à la valeur seuil de débit des gaz d'échappement Q*éch*ₛₑᵤᵢₗ, et l'unité de commande électronique et informatique 50 positionne donc la vanne de dérivation 33 en position ouverte à l'étape c).

De même, lorsque le débit des gaz d'échappement Q*éch*(t) est trop élevé, alors la récupération d'énergie est suspendue afin d'empêcher que la contre-pression à l'échappement CPE due au système de récupération d'énergie 30 n'augmente trop la consommation de carburant. L'unité de commande électronique et informatique 50 désactive le système de récupération d'énergie 30 lorsque le débit des gaz d'échappement Q*éch*(t) est supérieur à la valeur maximale de débit des gaz d'échappement Q*éch*ₘₐₓ, par exemple Q*éch*ₘₐₓ = 50 g/s, et l'unité de commande électronique et informatique 50 positionne donc la vanne de dérivation 33 en position ouverte.

Enfin, afin d'empêcher la détérioration du système de récupération d'énergie 30 qui ne peut fonctionner au-delà d'une certaine température, la récupération d'énergie est interrompue lorsque la température T*éch*(t) des gaz d'échappement à l'instant t est trop élevée. Ainsi, la récupération d'énergie est empêchée lorsque la température des gaz d'échappement T*éch*(t) est supérieure à une valeur maximale de température des gaz d'échappement T*éch*ₘₐₓ, par exemple T*éch*ₘₐₓ = 800°C. Dans ce cas encore, la position optimale de la vanne de dérivation 33 est déterminée comme étant sa position ouverte, dans laquelle aucun gaz d'échappement ne circule dans le système de récupération d'énergie 30.

Au contraire, lorsque le résultat de la comparaison de la sous-étape b1) 201 montre :
- que la différence de débit de carburant injecté ΔQ*carb*(t) est inférieure à la valeur seuil de différence de débit de carburant injecté ΔQ*carb*ₛₑᵤᵢₗ, et que le débit des gaz d'échappement Q*éch*(t) est supérieur à la valeur seuil de débit des gaz d'échappement Q*éch*_{seul,}
- que le débit des gaz d'échappement Q*éch*(t) est inférieur à la valeur maximale de débit des gaz d'échappement Q*éch*ₘₐₓ, et
- que la température des gaz d'échappement T*éch*(t) est inférieure à la valeur maximale de température des gaz d'échappement T*éch*ₘₐₓ,
alors les conditions de fonctionnement du moteur 1 sont propices à une récupération d'énergie et l'énergie récupérable par le système de récupération d'énergie 30 peut être valorisée. Il est donc intéressant d'orienter une partie au moins des gaz d'échappement vers le système de récupération d'énergie 30.

Les trois modes de réalisation du procédé de pilotage représentés sur les figures 2, 3, 7 et 9 correspondent à différentes stratégies de valorisation de l'énergie thermique des gaz d'échappement.

Dans le premier mode de réalisation, représenté sur la figure 2, la vanne de dérivation 33 est une vanne de type « tout-ou-rien », c'est-à-dire que la vanne de dérivation 33 ne peut prendre que deux positions distinctes : la position ouverte et la position fermée précédemment décrites.

L'étape de détermination 200 de la position optimale de la vanne de dérivation 33 (figure 2), comporte alors les sous-étapes décrites ci-après.

Dans une sous-étape b3) 203 (figure 2), l'unité de commande électronique et informatique 50 détermine pour la position fermée de la vanne de dérivation 33 :
- la surconsommation maximale de carburant S*conso*_{CPEmax} induite par la contre-pression à l'échappement maximale CPEₘₐₓ imposée par la vanne de dérivation 33 dans sa position fermée, et
- le gain maximal de consommation de carburant G*récup*_{CPEmax} pour cette position fermée de la vanne de dérivation 33.

Dans une sous-étape b4) 204 (figure 2), l'unité de commande électronique et informatique 50 compare la surconsommation maximale de carburant S*conso*_{CPEmax} avec le gain maximal de consommation de carburant G*récup*_{CPEmax}.

Dans une sous-étape b5) 206 (figure 2), l'unité de commande électronique et informatique 50 détermine que la position optimale de la vanne de dérivation 33 est sa position fermée, lorsque la comparaison de la sous-étape b4) 204 montre que la surconsommation maximale de carburant S*conso*_{CPEmax} est inférieure au gain maximal de consommation de carburant G*récup*_{CPEmax} pour cette position fermée de la vanne de dérivation 33 (cas de la figure 4 par exemple). Dans cette position fermée, la récupération de l'énergie thermique des gaz d'échappement est maximale.

Dans une sous-étape 205 (figure 2), l'unité de commande électronique et informatique 50 détermine que la position optimale de la vanne de dérivation 33 est sa position ouverte lorsque la comparaison de la sous-étape b4) 204 montre que la surconsommation maximale de carburant S*conso*_{CPEmax} est supérieure au gain maximal de consommation de carburant G*récup*_{CPEmax} pour la position fermée de la vanne de dérivation 33 (cas des figures 5 et 6 par exemple).

Dans cette position ouverte, aucune énergie n'est récupérée de la part du système de récupération d'énergie 30, puisqu'aucun gaz d'échappement ne circule dans le conduit de dérivation 31 à travers l'échangeur de chaleur 32.

Le premier mode de réalisation représenté sur la figure 2 est particulièrement intéressant lorsque les conditions de fonctionnement du moteur 1 (Qa*ir,* Q*carb,* Q*éch,* T*éch*) sont telles que les courbes représentant la variation du gain de consommation de carburant G*récup* 401 et de la surconsommation de carburant S*conso* 402 en fonction de la contre-pression à l'échappement CPE sont disposées l'une par rapport à l'autre comme dans l'exemple de la figure 4.

En effet, pour cet exemple, la comparaison de la sous-étape b4) 204 entre la surconsommation maximale de carburant S*conso*_{CPEmax} et le gain maximal de consommation de carburant G*récup*_{CPEmax} montre que le gain net de consommation de carburant G*récup*_{CPEmax} - S*conso*_{CPEmax} 404 est positif pour la contre-pression maximale CPEmax, rendant la récupération d'énergie par le système de récupération d'énergie 30 valorisable.

On a représenté sur la figure 3 un deuxième mode de réalisation du procédé de pilotage dans lequel la vanne de dérivation 33 est une vanne séquentielle pouvant prendre une pluralité de positions entre la position ouverte et la position fermée.

Selon ce deuxième mode de réalisation, les sous-étapes b1) 201, b2) 202, b3) 203, b4) 204, et b5) 206 du deuxième mode de réalisation sont identiques à celles du premier mode de réalisation représenté sur la figure 2 et décrites précédemment.

Le deuxième mode de réalisation diffère du premier mode de réalisation quant à la stratégie de commande de la vanne de dérivation 33 lorsque la surconsommation maximale de carburant S*conso*_{CPEmax} est supérieure au gain maximal de consommation de carburant G*récup*_{CPEmax} pour la position fermée de la vanne de dérivation 33 induisant une contre-pression à l'échappement CPEₘₐₓ maximale.

Ce deuxième mode de réalisation représenté sur la figure 3 est particulièrement intéressant lorsque les conditions de fonctionnement du moteur 1 (Q*air,* Q*carb,* Q*éch,* T*éch*) sont telles que les courbes d'évolution du gain de consommation de carburant *Grécup* 501, 601 et de la surconsommation de carburant S*conso* 502, 602 en fonction de la contre-pression à l'échappement CPE sont similaires aux courbes des figures 5 et 6.

En effet, sur ces figures, le gain net de consommation de carburant G*récup - Sconso* 504, 604 est négatif pour la contre-pression à l'échappement maximale CPEₘₐₓ. Dans cette situation, la récupération d'énergie est non valorisable lorsque la vanne de dérivation 33 est dans sa position fermée. Ainsi, la comparaison de la sous-étape b4) 204 entre la surconsommation maximale de carburant S*conso*_{CPEmax} et le gain maximal de consommation de carburant G*récup*_{CPEmax} montre que le gain net de consommation de carburant G*récup*_{CPEmax} - S*conso*_{CPEmax} est négatif, rendant la valorisation de l'énergie récupérée par le système de récupération d'énergie 30 inefficace.

Pour déterminer la position optimale de la vanne de dérivation 33, le procédé de pilotage selon ce deuxième mode de réalisation met en oeuvre les sous-étapes décrites ci-après.

Dans une sous-étape b6) 207 (figure 3), l'unité de commande électronique et informatique 50 détermine tout d'abord une première surconsommation de carburant S*conso*_{CPE0} correspondant à une première contre-pression à l'échappement CPE₀ et à une première position de la vanne de dérivation 33, cette première surconsommation de carburant S*conso*_{CPE0} étant égale au gain maximal de consommation de carburant G*récup*_{CPEmax} pour la position fermée de la vanne de dérivation 33.

Ceci est illustré sur les figures 5 et 6 à partir desquelles la valeur de la première contre-pression à l'échappement CPE₀ peut être obtenue comme suit :
- on trace la droite d'ordonnée y = G*récup*_{CPEmax}, 505, 605 à partir de la courbe du gain de consommation de carburant G*récup,* la droite 505, 605 croise la courbe de la surconsommation de carburant S*conso* au point d'intersection SO ;
- l'abscisse du point d'intersection S0 est égale à la première contre-pression à l'échappement CPE₀.

À partir de la première contre-pression à l'échappement CPE₀, l'unité de commande électronique et informatique 50 détermine alors une deuxième surconsommation de carburant S*conso*_{CPE0/2} correspondant à une deuxième position de la vanne de dérivation 33, pour laquelle la part des gaz d'échappement acheminée vers le conduit de dérivation 31 est inférieure à la part des gaz d'échappement acheminée vers ce conduit de dérivation 31 lorsque la vanne de dérivation 33 est dans ladite première position.

Plus précisément, ici, la deuxième surconsommation de carburant S*conso*_{CPE0/2} est égale à la surconsommation induite par une deuxième contre-pression à l'échappement CPE₀/2 égale à la moitié de la première contre-pression à l'échappement CPE₀.

L'unité de commande électronique et informatique 50 détermine également à l'étape b6) un deuxième gain de consommation de carburant G*récup*_{CPE0/2} obtenu pour cette deuxième position de la vanne de dérivation 33.

Dans une sous-étape b7) 208 (figure 3), l'unité de commande électronique et informatique 50 compare alors la deuxième surconsommation de carburant S*conso*_{CPE0/2} avec le deuxième gain de consommation de carburant G*récup*_{CPE0/2}*,* déterminés à la sous-étape b6).

Dans une sous-étape b8) 209, 210 (figure 3), l'unité de commande électronique et informatique 50 détermine la position optimale de la vanne de dérivation 33 en fonction du résultat de la comparaison de la sous-étape b7).

Lorsque le résultat de la comparaison de la sous-étape b7) montre que la deuxième surconsommation de carburant S*conso*_{CPE0/2} est supérieure au deuxième gain de consommation de carburant G*récup*_{CPE0/2} pour cette deuxième position de la vanne de dérivation 33 (cas de la figure 5), alors la position optimale de la vanne de dérivation 33 est déterminée 209 par l'unité de commande électronique et informatique 50 comme étant la position ouverte car aucune récupération d'énergie n'est valorisable.

Lorsque le résultat de la comparaison de la sous-étape b7) montre que la deuxième surconsommation de carburant S*conso*_{CPE0/2} est inférieure au deuxième gain de consommation de carburant G*récup*_{CPE0/2} pour cette deuxième position de la vanne de dérivation 33 (cas de la figure 6), alors la position optimale de la vanne de dérivation 33 est déterminée 210 par l'unité de commande électronique et informatique 50 comme étant la deuxième position déterminée lors de la sous-étape b6).

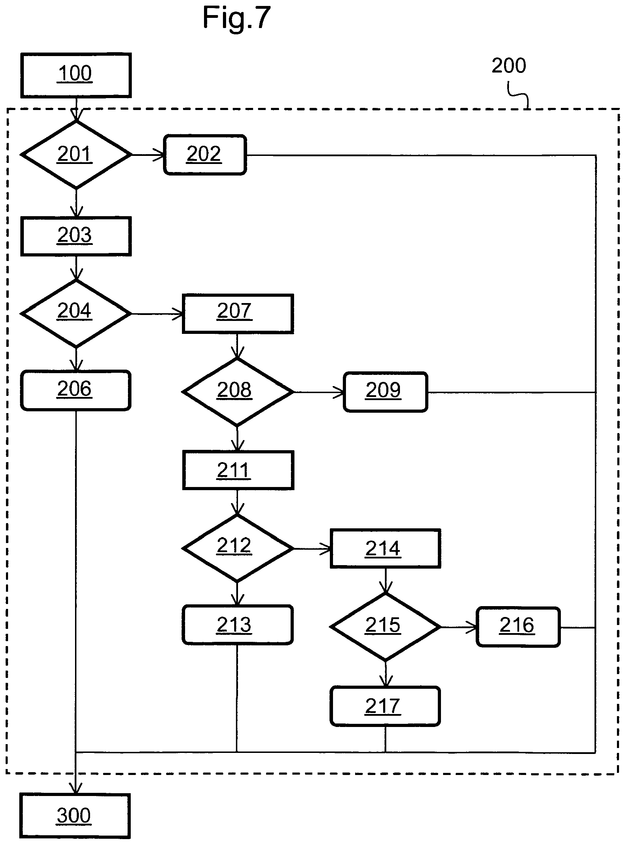

La figure 7 montre une variante de ce deuxième mode de réalisation, dans laquelle la vanne de dérivation 33 est également une vanne séquentielle.

Selon cette variante du deuxième mode de réalisation, les sous-étapes b1) à b7) sont réalisées de la même manière que dans le deuxième mode de réalisation décrit précédemment en référence à la figure 3.

Lorsque la comparaison de la sous-étape b7) 208 montre que la deuxième surconsommation de carburant S*conso*_{CPE0/2} est supérieure au deuxième gain de consommation de carburant G*récup*_{CPE0/2}, l'unité de commande électronique et informatique 50 réalise la sous-étape b8) 209 (figure 7) : l'unité de commande électronique et informatique 50 détermine la position optimale de la vanne de dérivation 33 comme étant sa position ouverte.

En revanche, lorsque la comparaison de la sous-étape b7) 208 montre que la deuxième surconsommation de carburant S*conso*_{CPE0/2} est inférieure au deuxième gain de consommation de carburant G*récup*_{CPE0/2}*,* à la sous-étape b8), on réalise les sous-étapes suivantes.

Dans une sous-étape b9) 211 (figure 7), l'unité de commande électronique et informatique 50 détermine :
- un premier gain net de consommation de carburant G*récup*_{CPE0} - S*conso*_{CPE0} qui est égal à la différence entre un premier gain de consommation de carburant G*récup*_{CPE0}, obtenu lorsque la vanne de dérivation 33 est dans ladite première position, et la première surconsommation de carburant S*conso*_{CPE0} imposée par la vanne de dérivation 33 dans cette première position, et
- un deuxième gain net de consommation de carburant G*récup*_{CPE0/2} - S*conso*_{CPE0/2} qui est égal à la différence entre le deuxième gain de consommation de carburant G*récup*_{CPE0/2} et la deuxième surconsommation de carburant S*conso*_{CPE0/2}.

Dans une sous-étape b10) 212 (figure 7), l'unité de commande électronique et informatique 50 compare le premier gain net de consommation de carburant G*récup*_{CPE0} *-* S*conso*_{CPE0} avec le deuxième gain net de consommation de carburant G*récup*_{CPE0/2} - S*conso*_{CPE0/2}*.*

Dans une sous-étape b11), l'unité de commande électronique et informatique 50 détermine la position optimale de la vanne de dérivation 33 en fonction de la comparaison de la sous-étape b10).

Lorsque cette comparaison 212 montre que le premier gain net de consommation de carburant G*récup*_{CPE0} - S*conso*_{CPE0} est inférieur au deuxième gain net de consommation de carburant G*récup*_{CPE0/2} - S*conso*_{CPE0/2}*,* alors l'unité de commande électronique et informatique 50 détermine 213 la position optimale de la vanne de dérivation 33 comme étant la deuxième position précédemment déterminée 207.

Lorsque la comparaison de la sous-étape b10) 212 montre que le premier gain net de consommation de carburant G*récup*_{CPE0} *-* S*conso*_{CPE0} est supérieur au deuxième gain net de consommation de carburant G*récup*_{CPE0/2} - S*conso*_{CPE0/2}, alors l'unité de commande électronique et informatique 50 réalise les sous-étapes suivantes.

Dans une sous-étape b12) 214 (figure 7), l'unité de commande électronique et informatique détermine une troisième surconsommation de carburant S*conso*_{3*CPE0/2} correspondant à une troisième position de la vanne de dérivation 33, pour laquelle la part des gaz d'échappement acheminée vers le conduit de dérivation 31 est supérieure à la part des gaz d'échappement acheminée vers ce conduit de dérivation 31 lorsque la vanne de dérivation 33 est dans ladite première position.

Plus précisément, ici, la troisième surconsommation de carburant S*conso*_{3*CPE0/2} est égale à la surconsommation induite par une troisième contre-pression à l'échappement 3*CPE₀/2 égale au triple de la deuxième contre-pression à l'échappement CPE₀/2.

L'unité de commande électronique et informatique 50 détermine également à l'étape b12) :
- un troisième gain de consommation de carburant G*récup*_{3*CPE0/2} obtenu pour cette troisième position de la vanne de dérivation 33, et
- un troisième gain net de consommation de carburant G*récup*_{3*CPE0/2} - S*conso*_{3*CPE0/2} qui est égal à la différence entre le troisième gain de consommation de carburant G*récup*_{3*CPE0/2} et la troisième surconsommation de carburant S*conso*_{3*CPE0/2} précédemment déterminés.

Dans une sous-étape b13) 215 (figure 7), l'unité de commande électronique et informatique 50 compare alors le premier gain net de consommation de carburant G*récup*_{CPE0} - S*conso*_{CPE0} avec le troisième gain net de consommation de carburant G*récup*_{3*CPE0/2} - S*conso*_{3*CPE0/2}.

Dans une sous-étape b14), l'unité de commande électronique et informatique 50 détermine la position optimale de la vanne de dérivation 33 en fonction de la comparaison de la sous-étape b13).

Lorsque cette comparaison 215 montre que le premier gain net de consommation de carburant G*récup*_{CPE0} *-* S*conso*_{CPE0} est inférieur au troisième gain net de consommation de carburant G*récup*_{*3**CPE0/2} *-* S*conso*_{*3**CPE0/2}, alors l'unité de commande électronique et informatique 50 détermine 216 la position optimale de la vanne de dérivation 33 comme étant la troisième position de la vanne de dérivation 33 déterminée à la sous-étape 214 de la figure 7.

Lorsque la comparaison de la sous-étape b13) 215 montre que le premier gain net de consommation de carburant G*récup*_{CPE0} - S*conso*_{CPE0} est supérieur au troisième gain net de consommation de carburant G*récup*_{*3**CPE0/2} - S*conso*_{*3**CPE0/2}, alors l'unité de commande électronique et informatique 50 détermine 217 la position optimale de la vanne de dérivation 33 comme étant la première position de la vanne de dérivation 33 déterminée à la sous-étape b6).

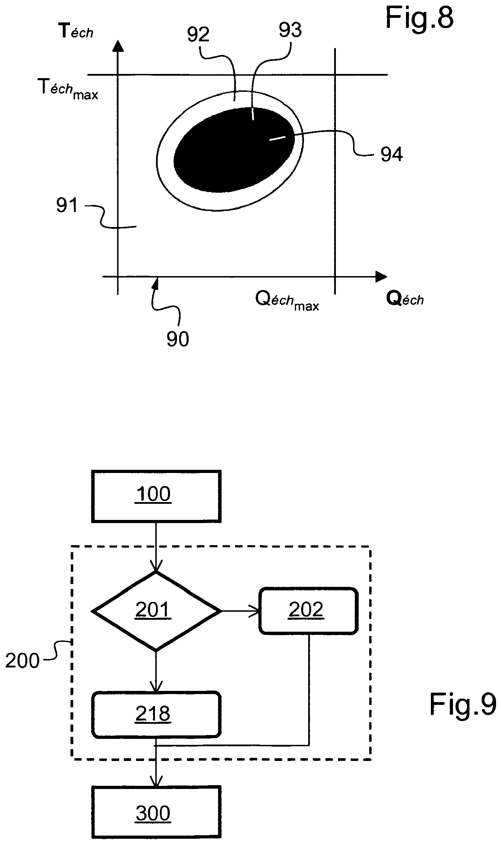

On a représenté sur la figure 9, un diagramme schématique illustrant un troisième mode de réalisation du procédé de pilotage selon l'invention.

Les sous-étapes b1) 201 et b2) 202 de ce troisième mode de réalisation du procédé de pilotage sont identiques aux sous-étapes b1) et b2) des deux modes de réalisation (voir figure 2, 3, et 7) décrites précédemment.

Selon ce troisième mode de réalisation, l'unité de commande électronique et informatique détermine 218, à l'instant t, la position optimale de la vanne de dérivation 33 en fonction de la température T*éch(t)* et du débit Q*éch*(t) des gaz d'échappement déterminés à l'étape a) 100 (figure 9), selon une cartographie prédéfinie.

On a représenté sur la figure 8 un exemple de cartographie pouvant être utilisée dans le procédé de pilotage selon ce troisième mode de réalisation.

Cette cartographie est ici destinée à être utilisée pour la commande d'une vanne de dérivation de type séquentiel. En variante, on peut envisager d'utiliser une autre cartographie pour la commande de tout autre type de vanne de dérivation, notamment une vanne de dérivation ne comportant que deux positions ouverte et fermée.

Cette cartographie est établie en fonction, d'une part, du débit Q*éch*(t) des gaz d'échappement (en abscisse) et, d'autre part, de la température T*éch*(t) des gaz d'échappement (en ordonnée).

Les valeurs maximales précédemment déterminées, à savoir la valeur maximale de débit des gaz d'échappement Q*éch*ₘₐₓ et la valeur maximale de température des gaz d'échappement T*éch*ₘₐₓ définissent un domaine 90 qui est borné par des valeurs minimales de Q*éch* et de T*éch* qui sont nulles. À l'intérieur de ce domaine 90, chaque point peut être associé à une position particulière de la vanne de dérivation 33.

Plus précisément, la cartographie de la figure 8 donne, pour chaque couple de valeurs de la température T*éch(t)* et du débit Q*éch*(t) des gaz d'échappement d'une plage donnée, la position optimale de la vanne de dérivation 33 prédéterminée correspondant à ces valeurs de température et de débit des gaz d'échappement.

Dans la pratique, la cartographie de la figure 8 peut être établie de la même manière que les courbes représentées sur les figures 4 à 6, à savoir théoriquement au moyen de simulations numériques du moteur 1 équipé du système de récupération d'énergie 30 ou bien empiriquement au moyen de mesures préalables réalisées sur un moteur modèle dont le fonctionnement est représentatif de l'ensemble des moteurs du même type.

Cette cartographie est par exemple mise en mémoire dans l'unité de commande électronique et informatique 50.

Le domaine 90 de la cartographie comprend une première zone 91 dans laquelle chaque point de fonctionnement du moteur de coordonnées (Q*éch*(t),T*éch*(t)) est associé à une position ouverte de la vanne de dérivation 33.

Ainsi, lorsque la température T*éch(t)* et le débit Q*éch*(t) des gaz d'échappement déterminés à l'étape a) 100 définissent un point de fonctionnement du moteur 1 compris dans cette première zone 91, alors la position optimale de la vanne de dérivation 33 déterminée à l'étape b) 218 correspond à une position ouverte de celle-ci.

De la même manière, le domaine 90 de la cartographie de la figure 8 comprend ici une deuxième zone 92, une troisième zone 93, et une quatrième zone 94.

Dans l'exemple de la figure 8, les différentes zones sont délimitées comme suit :
- la deuxième zone 92 est une zone pour laquelle la position optimale de la vanne de dérivation 33 correspond à une fermeture de 20% de cette vanne de dérivation 33, c'est-à-dire que 20% des gaz d'échappement arrivant en entrée de la vanne de dérivation 33 sont réacheminés vers le conduit de dérivation 31, le reste des gaz d'échappement, à savoir 80%, étant acheminés à la sortie de la vanne de dérivation 33 vers le pot d'échappement 42.
- la troisième zone 93 est une zone pour laquelle la position optimale de la vanne de dérivation 33 correspond à une fermeture de 40% de cette vanne de dérivation 33, c'est-à-dire que 40% des gaz d'échappement arrivant en entrée de la vanne de dérivation 33 sont réacheminés vers le conduit de dérivation 31, et
- la quatrième zone 94 est une zone pour laquelle la position optimale de la vanne de dérivation 33 correspond à la position fermée, soit une fermeture de 100% de la vanne de dérivation 33.

On a décrit ici dans la variante du deuxième mode de réalisation, une étape d'optimisation pour la détermination de la position optimale de la vanne de dérivation. Cette méthode d'optimisation prenait ici comme valeur de départ la valeur de la première contre-pression à l'échappement CPE₀.

Alternativement, il est possible d'envisager une telle étape d'optimisation à partir d'une valeur initiale quelconque de la contre-pression à l'échappement CPEₓ. L'étape d'optimisation se déroule alors de manière similaire à celle décrite ici.

D'autres méthodes d'optimisation peuvent être envisagées, par exemple une méthode de la mire ou un algorithme du simplexe. De telles méthodes sont par exemple décrites dans le document FR2897111.

Enfin, on a envisagé dans le premier mode de réalisation l'utilisation d'une vanne de dérivation comportant deux positions complètement ouverte et complètement fermée. En variante, ce premier mode de réalisation peut être mis en oeuvre avec tout type de vanne présentant deux positions distinctes, notamment avec une vanne de dérivation présentant une position complètement ouverte et une position partiellement fermée.

## Revendications

1. Procédé de pilotage d'un système de récupération d'énergie (30) d'une ligne d'échappement (40) d'un moteur (1) de véhicule automobile, ce système de récupération d'énergie (30) comportant :
- un conduit de dérivation (31) piqué, à ses deux extrémités (31 A, 31 B), sur un conduit d'échappement (41) de ladite ligne d'échappement (40) du moteur (1) et comprenant un échangeur de chaleur (32), et
- une vanne de dérivation (33) disposée dans ledit conduit d'échappement (41), en entrée dudit conduit de dérivation (31), ladite vanne de dérivation (33) étant adaptée à prendre différentes positions dans ledit conduit d'échappement (41),
ledit procédé de pilotage comportant les étapes suivantes :
a) déterminer (100), à l'instant t, des valeurs du débit de carburant injecté Q*carb*(t) dans ledit moteur (1), du débit d'air admis Q*air*(t) dans ledit moteur (1), de la température des gaz d'échappement T*éch*(t), et du débit des gaz d'échappement Q*éch*(t) circulant dans ledit conduit d'échappement (41) ;
b) déterminer (200), à l'instant t, une position optimale de ladite vanne de dérivation (33) en fonction :
- d'un gain de consommation de carburant G*récup,* réalisé grâce au système de récupération d'énergie (30), correspondant aux valeurs de la température des gaz d'échappement T*éch*(t) et du débit des gaz d'échappement Q*éch*(t) déterminées à l'étape a), et
- d'une surconsommation de carburant S*conso,* liée à la mise en oeuvre du système de récupération d'énergie (30) pour ladite position optimale de la vanne de dérivation (33), correspondant aux valeurs du débit de carburant injecté Q*carb*(t), du débit d'air admis Q*air*(t), de la température des gaz d'échappement T*éch*(t) déterminées à l'étape a) et à la position optimale de la vanne de dérivation (33),
c) positionner (300) ladite vanne de dérivation (33) dans ladite position optimale déterminée à l'étape b).

2. Procédé de pilotage selon la revendication 1, selon lequel, à l'étape b), on réalise les sous-étapes suivantes :
b1) on compare (201) à l'instant t :
- la différence de débit de carburant injecté ΔQ*carb*(t) entre le débit de carburant injecté Q*carb*(t) déterminé à l'instant t et le débit de carburant Q*carb*(t-Δt) déterminé à un instant précédent t-Δt avec une valeur seuil de différence de débit de carburant injecté ΔQ*carb*ₛₑᵤᵢₗ prédéterminée, et/ou
- le débit des gaz d'échappement Q*éch*(t) avec une valeur seuil de débit des gaz d'échappement Q*éch*ₛₑᵤᵢₗ prédéterminée, et/ou
- le débit des gaz d'échappement Q*éch*(t) avec une valeur maximale de débit des gaz d'échappement Q*éch*ₘₐₓ prédéterminée, et/ou
- la température des gaz d'échappement T*éch*(t) avec une valeur maximale de température des gaz d'échappement T*éch*ₘₐₓ prédéterminée, et
b2) on détermine ladite position optimale de la vanne de dérivation (33) en fonction du résultat de la comparaison de la sous-étape b1).

3. Procédé de pilotage selon la revendication 2, selon lequel, ladite position optimale de la vanne de dérivation (33), déterminée à la sous-étape b2), est une position ouverte dans laquelle les gaz d'échappement sont entièrement acheminés vers le conduit d'échappement (41), lorsque le résultat de la comparaison de la sous-étape b1) montre qu'au moins une des conditions suivantes est vérifiée à l'instant t :
- la différence de débit de carburant injecté ΔQ*carb*(t) est supérieure à ladite valeur seuil de différence de débit de carburant injecté ΔQ*carb*ₛₑᵤᵢₗ, et le débit des gaz d'échappement Q*éch*(t) est supérieur à ladite valeur seuil de débit des gaz d'échappement Q*éch*ₛₑᵤₗ,
- le débit des gaz d'échappement Q*éch*(t) est inférieur à ladite valeur seuil de débit des gaz d'échappement Q*éch*ₛₑᵤᵢₗ,
- le débit des gaz d'échappement Q*éch*(t) est supérieur à ladite valeur maximale de débit des gaz d'échappement Q*éch*ₘₐₓ,
- la température des gaz d'échappement T*éch*(t) est supérieure à ladite valeur maximale de température des gaz d'échappement T*éch*ₘₐₓ.

4. Procédé de pilotage selon l'une des revendications 1 à 3, selon lequel, à l'étape b), on réalise une sous-étape de comparaison (204) du gain de consommation de carburant G*récup* avec la surconsommation de carburant S*conso.*

5. Procédé de pilotage selon l'une des revendications 1 à 4, selon lequel, à l'étape b), on réalise les sous étapes-suivantes :
b3) on détermine, pour une position fermée de la vanne de dérivation (33), dans laquelle les gaz d'échappement sont entièrement acheminés vers le conduit de dérivation (31), une surconsommation maximale de carburant S*conso*_{CPEmax}, et un gain maximal de consommation de carburant G*récup*_{CPEmax} pour cette position fermée de la vanne de dérivation (33),
b4) on compare la surconsommation maximale de carburant S*conso*_{CPEmax} avec le gain maximal de consommation de carburant G*récup*_{CPEmax}, et
b5) on détermine la position optimale de la vanne de dérivation (33) comme étant la position fermée lorsque le résultat de la comparaison précédente montre que la surconsommation maximale de carburant S*conso*_{CPEmax} est inférieure au gain maximal de consommation de carburant G*récup*_{CPEmax} pour cette position fermée de la vanne de dérivation (33).

6. Procédé de pilotage selon la revendication 5, selon lequel, à la sous-étape b5), lorsque la surconsommation maximale de carburant S*conso*_{CPEmax} imposée par la vanne de dérivation (33) dans sa position fermée est supérieure au gain maximal de consommation de carburant G*récup*_{CPEmax} pour la position fermée de la vanne de dérivation (33), on réalise les sous-étapes suivantes :
b6) on détermine :
- une première surconsommation de carburant S*consoc*_{PE0}, correspondant à une première position de la vanne de dérivation (33), cette première surconsommation de carburant S*conso*_{CPE0} étant égale au gain maximal de consommation de carburant G*récup*_{CPEmax} correspondant à la position fermée de la vanne de dérivation (33),
- une deuxième surconsommation de carburant S*conso*_{CPE0/2} correspondant à une deuxième position de la vanne de dérivation (33), pour laquelle la part des gaz d'échappement acheminée vers le conduit de dérivation (31) est inférieure à la part des gaz d'échappement acheminée vers ce conduit de dérivation (31) lorsque la vanne de dérivation (33) est dans ladite première position, et
- un deuxième gain de consommation de carburant G*récup*_{CPE0/2} obtenu pour cette deuxième position de la vanne de dérivation (33),
b7) on compare la deuxième surconsommation de carburant S*conso*_{CPE0/2} avec le deuxième gain de consommation de carburant G*récup*_{CPE0/2}, et
b8) on détermine la position optimale de la vanne de dérivation (33) en fonction du résultat de la comparaison de la sous-étape b7).

7. Procédé de pilotage selon la revendication 6, selon lequel, à la sous-étape b8), la position optimale de la vanne de dérivation (33) est déterminée comme étant la deuxième position lorsque, à la sous-étape b7), la comparaison montre que la deuxième surconsommation de carburant S*conso*_{CPE0/2} est inférieure au deuxième gain de consommation de carburant G*récup*_{CPE0/2} pour cette deuxième position de la vanne de dérivation (33).

8. Procédé de pilotage selon la revendication 6, selon lequel, la comparaison de la sous-étape b7) ayant montré que la deuxième surconsommation de carburant S*conso*_{CPE0/2} est supérieure au deuxième gain de consommation de carburant G*récup*_{CPE0/2}, à la sous-étape b8), on réalise les sous-étapes suivantes :
b9) on détermine :
- un premier gain net de consommation de carburant G*récup*CPE0 - S*conso*_{CPE0} qui est égal à la différence entre un premier gain de consommation de carburant G*récu*_{CPE0}, obtenu lorsque la vanne de dérivation (33) est dans sa première position, et ladite première surconsommation de carburant S*conso*_{CPE0} imposée par la vanne de dérivation (33) dans cette première position, et
- un deuxième gain net de consommation de carburant G*récup*_{CPE0/2} - S*conso*_{CPE0/2} qui est égal à la différence entre le deuxième gain de consommation de carburant G*récup*_{CPE0/2} et la deuxième surconsommation de carburant S*conso*_{CPE0/2},
b10) on compare le premier gain net de consommation de carburant G*récup*CPE0 - S*conso*_{CPE0} avec le deuxième gain net de consommation de carburant G*récup*_{CPE0/2} *-* S*conso*_{CPE0/2}, et
b11) on détermine la position optimale de la vanne de dérivation (33) en fonction de la comparaison de la sous-étape b10).

9. Procédé de pilotage selon la revendication 8, selon lequel, à la sous-étape b11), la position optimale de la vanne de dérivation (33) est déterminée comme étant la deuxième position lorsque, à la sous-étape b10), la comparaison montre que le premier gain net de consommation de carburant G*récup*_{CPE0} - S*conso*_{CPE0} est inférieur au deuxième gain net de consommation de carburant G*récup*_{CPE0/2} - S*conso*_{CPE0/2}.

10. Procédé de pilotage selon l'une des revendications 1 à 3, selon lequel, à l'étape b), on détermine à l'instant t ladite position optimale de la vanne de dérivation (33) en fonction de la température T*éch*(t) et du débit Q*éch*(t) des gaz d'échappement, selon une cartographie prédéfinie (91, 92, 93, 94) donnant, pour chaque couple de valeurs de la température T*éch*(t) et du débit Q*éch*(t) des gaz d'échappement appartenant à une plage de températures et à une plage de débits données, la position optimale de la vanne de dérivation (33) prédéterminée correspondante.

## Patentansprüche

1. Verfahren zur Steuerung eines Systems (30) zur Rückgewinnung von Energie aus einer Abgasleitung (40) eines Motors (1) eines Kraftfahrzeugs, wobei dieses Energierückgewinnungssystem (30) Folgendes umfasst:
- einen Umgehungskanal (31), der an seinen beiden Enden (31A, 31B) an einem Auslasskanal (41) der Abgasleitung (40) des Motors (1) angeschlossen ist und einen Wärmetauscher (32) umfasst, und
- ein Umgehungsventil (33), das am Eingang des Umgehungskanals (31) in dem Auslasskanal (41) angeordnet ist, wobei das Umgehungsventil (33) dazu ausgeführt ist, in dem Auslasskanal (41) verschiedene Stellungen einzunehmen,
wobei das Steuerverfahren die folgenden Schritte umfasst:
a) Bestimmen (100) zum Zeitpunkt t von Werten der in den Motor (1) eingespritzten Kraftstoffmenge Qcarb(t), der in den Motor (1) eingelassenen Luftmenge Qair(t), der Temperatur der Abgase Tech(t) und der in dem Auslasskanal (41) zirkulierenden Abgasmenge Qech(t) ;
b) Bestimmen (200) zum Zeitpunkt t einer optimalen Stellung des Umgehungsventils (33) als Funktion:
- einer dank des Energierückgewinnungssystems (30) realisierten Einsparung des Verbrauchs des Kraftstoffs Grécup, die den Werten der Abgastemperatur Tech(t) und der Abgasmenge Qéch(t), die in Schritt (a) bestimmt wurden, entspricht, und
- eines Mehrverbrauchs des Kraftstoffs Sconso, der mit dem Einsatz des Energierückgewinnungssystems (30) bei der optimalen Stellung des Umgehungsventils (33) verbunden ist und den Werten der eingespritzten Kraftstoffmenge Qcarb(t), der eingelassenen Luftmenge Qair(t), der Temperatur der Abgase Tech(t), die in Schritt a) bestimmt wurden, und der optimalen Stellung des Umgehungsventils (33) entspricht,
c) Positionieren (300) des Umgehungsventils (33) in die in Schritt (b) bestimmte optimale Stellung.

2. Steuerverfahren nach Anspruch 1, wobei in Schritt (b) die folgenden Unterschritte durchgeführt werden:
b1) Vergleichen (201) zum Zeitpunkt t:
- der Differenz der eingespritzten Kraftstoffmenge ΔQcarb(t) zwischen der zum Zeitpunkt t bestimmten eingespritzten Kraftstoffmenge Qcarb(t) und der zu einem vorhergehenden Zeitpunkt t-Δt bestimmten Kraftstoffmenge Qcarb(t-Δt) mit einem vorbestimmten Differenzschwellenwert der eingespritzten Kraftstoffmenge ΔQcarbₛₑᵤᵢₗ und/oder
- der Abgasmenge Qech(t) mit einem vorbestimmten Schwellenwert der Abgasmenge Qechₛₑᵤᵢₗ und/oder
- der Abgasmenge Qech(t) mit einem vorbestimmten Maximalwert der Abgasmenge QéChₘₐₓ und/oder
- der Temperatur der Abgase Tech(t) mit einem vorbestimmten Maximalwert der Temperatur der Abgase Téchₘₐₓ und
b2) Bestimmen der optimalen Stellung des Umgehungsventils (33) als Funktion des Ergebnisses des Vergleichs von Unterschritt b1).

3. Steuerverfahren nach Anspruch 2, wobei die in Unterschritt b2) bestimmte optimale Stellung des Umgehungsventils (33) eine geöffnete Stellung ist, in der die Abgase vollständig zum Auslasskanal (41) geleitet werden, wenn das Ergebnis des Vergleichs von Unterschritt b1, zeigt, dass mindestens eine der folgenden Bedingungen zum Zeitpunkt t verifiziert ist:
- die Differenz der eingespritzten Kraftstoffmenge ΔQcarb(t) ist größer als der Differenzschwellenwert der eingespritzten Kraftstoffmenge ΔQcarbₛₑᵤᵢₗ und die Abgasmenge Qech (t) ist größer als der Schwellenwert der Abgasmenge QéChₛₑᵤᵢₗ,
- die Abgasmenge Qéch(t) ist kleiner als der Schwellenwert der Abgasmenge Qéchₛₑᵤᵢₗ,
- die Abgasmenge Qéch(t) ist größer als der Maximalwert der Abgasmenge Qéchₘₐₓ,
- die Temperatur der Abgase Tech(t) ist höher als der Maximalwert der Temperatur der Abgase Techₘₐₓ.

4. Steuerverfahren nach einem der Ansprüche 1 bis 3, wobei in Schritt b) ein Unterschritt des Vergleichens (204) der Einsparung des Verbrauchs des Kraftstoffs Grécup mit dem Mehrverbrauch des Kraftstoffs Sconso durchgeführt wird.

5. Steuerverfahren nach einem der Ansprüche 1 bis 4, wobei in Schritt b) die folgenden Unterschritte durchgeführt werden:
b3) Bestimmen bei einer geschlossenen Stellung des Umgehungsventils (33), in der die Abgase vollständig zu dem Umgehungskanal (31) geleitet werden, eines maximalen Mehrverbrauchs des Kraftstoffs Sconso_{CPEmax} und einer maximalen Einsparung des Verbrauchs des Kraftstoffs Grécup_{CPEmax} bei dieser geschlossenen Stellung des Umgehungsventils (33),
b4) Vergleichen des maximalen Mehrverbrauchs des Kraftstoffs Sconso_{CPEmax} mit der maximalen Einsparung des Verbrauchs des Kraftstoffs Grécup_{CPEmax} und
b5) Bestimmen der optimalen Stellung des Umgehungsventils (33) als die geschlossene Stellung, wenn das Ergebnis des vorhergehenden Vergleichs zeigt, dass der maximale Mehrverbrauch des Kraftstoffs Sconso_{CPEmax} kleiner als die maximale Einsparung des Verbrauchs des Kraftstoffs Grécup_{CPEmax} bei dieser geschlossenen Stellung des Umgehungsventils (33) ist.

6. Steuerverfahren nach Anspruch 5, wobei in Unterschritt b5), wenn der durch das Umgehungsventil (33) in seiner geschlossenen Stellung auferlegte maximale Mehrverbrauch des Kraftstoffs Sconso_{CPEmax} größer als die maximale Einsparung des Verbrauchs des Kraftstoffs Grécup_{CPEmax} bei der geschlossenen Stellung des Umgehungsventils (33) ist, die folgenden Unterschritte durchgeführt werden:
b6) Bestimmen:
- eines ersten Mehrverbrauchs des Kraftstoffs Sconso_{CPE0}, der einer ersten Stellung des Umgehungsventils (33) entspricht, wobei dieser erste Mehrverbrauch des Kraftstoffs Sconso_{CPE0} gleich der maximalen Einsparung des Verbrauchs des Kraftstoffs Grécup_{CPEmax}, der der geschlossenen Stellung des Umgehungsventils (33) entspricht, ist,
- eines zweiten Mehrverbrauchs des Kraftstoffs Sconso_{CPE0/2}, der einer zweiten Stellung des Umgehungsventils (33) entspricht, bei der der zu dem Umgehungskanal (31) geleitete Teil der Abgase geringer als der Teil der Abgase ist, der zu dem Umgehungskanal (31) geleitet wird, wenn sich das Umgehungsventil (33) in der ersten Stellung befindet, und
- einer zweiten Einsparung des Verbrauchs des Kraftstoffs Grécup_{CPE0/2}, die bei dieser zweiten Stellung des Umgehungsventils (33) erhalten wird,
b7) Vergleichen des zweiten Mehrverbrauchs des Kraftstoffs Sconso_{CPE0/2} mit der zweiten Einsparung des Verbrauchs des Kraftstoffs Grécup_{CPE0/2} und
b8) Bestimmen der optimalen Stellung des Umgehungsventils (33) als Funktion des Ergebnisses des Vergleichs von Unterschritt b7).

7. Steuerverfahren nach Anspruch 6, wobei in Unterschritt b8) die optimale Stellung des Umgehungsventils (33) als die zweite Stellung bestimmt wird, wenn in Unterschritt b7) der Vergleich zeigt, dass der zweite Mehrverbrauch des Kraftstoffs Sconso_{CPE0/2} geringer als die zweite Einsparung des Verbrauchs des Kraftstoffs Grécup_{CPE0/2} bei dieser zweiten Stellung des Umgehungsventils (33) ist.

8. Steuerverfahren nach Anspruch 6, wobei, wenn der Vergleich von Unterschritt b7) gezeigt hat, dass der zweite Mehrverbrauch des Kraftstoffs Sconso_{CPE0/2} größer als die zweite Einsparung des Verbrauchs des Kraftstoffs Grécup_{CPE0/2} ist, in Unterschritt b8) die folgenden Unterschritte durchgeführt werden:
b9) Bestimmen:
- einer ersten Nettoeinsparung des Verbrauchs des Kraftstoffs Grécup_{CPE0} - Sconso_{CPE0}, die gleich der Differenz zwischen einer bei dem sich in seiner ersten Stellung befindlichem Umgehungsventil (33) erhaltenen ersten Einsparung des Verbrauchs des Kraftstoffs Grécup_{CPE0} und dem durch das Umgehungsventil (33) in dieser ersten Stellung auferlegten ersten Mehrverbrauch des Kraftstoffs Sconso_{CPE0} ist, und
- einer zweiten Nettoeinsparung des Verbrauchs des Kraftstoffs Grécup_{CPE0/2} - Sconso_{CPE0/2}, die gleich der Differenz zwischen der zweiten Einsparung des Verbrauchs des Kraftstoffs Grécup_{CPE0/2} und dem zweiten Mehrverbrauch des Kraftstoffs Sconso_{CPE0/2} ist,
b10) Vergleichen der ersten Nettoeinsparung des Verbrauchs des Kraftstoffs Grécup_{CPE0} - Sconso_{CPE0} mit der zweiten Nettoeinsparung des Verbrauchs des Kraftstoffs Grécup_{CPE0/2} - Sconso_{CPE0/2} und
b11) Bestimmen der optimalen Stellung des Umgehungsventils (33) als Funktion des Vergleichs von Unterschritt b10).

9. Steuerverfahren nach Anspruch 8, wobei in Unterschritt b11, die optimale Stellung des Umgehungsventils (33) als die zweite Stellung bestimmt wird, wenn in Unterschritt b10) der Vergleich zeigt, dass die erste Nettoeinsparung des Verbrauchs des Kraftstoffs Grecup_{CPE0} - Sconso_{CPE0} kleiner als die zweite Nettoeinsparung des Verbrauchs des Kraftstoffs Grécup_{CPE0/2} - Sconso_{CPE0/2} ist.

10. Steuerverfahren nach einem der Ansprüche 1 bis 3, wobei in Schritt b) zum Zeitpunkt t die optimale Stellung des Umgehungsventils (33) als Funktion der Temperatur Tech(t) und der Menge Qéch(t) der Abgase gemäß einem vordefinierten Kennfeld (91, 92, 93, 94), das für jedes Wertepaar der Temperatur Tech(t) und der Menge Qéch(t) der Abgase, die zu einem gegebenen Temperaturbereich und Mengenbereich gehören, die entsprechende vorbestimmte optimale Stellung des Umgehungsventils (33) gibt, bestimmt wird.

## Claims

1. Method for controlling an energy recovery system (30) of an exhaust line (40) of a motor vehicle engine (1), this energy recovery system (30) comprising:
- a bypass duct (31), pierced at both ends thereof (31A, 31B), into an exhaust duct (41) of said exhaust line (40) of the engine (1) and comprising a heat exchanger (32), and
- a bypass valve (33) arranged in said exhaust duct (41), at the inlet of said bypass duct (31), said bypass valve (33) being designed to assume different positions in said exhaust duct (41),
- said control method comprising the following steps:
a) determining (100), at the moment t, values of the injected fuel flow rate Q*fuel*(t) into said engine, of the inlet air flow rate Q*air*(t) into said engine (1), of the temperature of the exhaust gases Texh(t), and of the flow of the exhaust gases Q*exh*(t) circulating in said exhaust duct (41);
b) determining (200), at the moment t, an optimum position of said bypass valve (33) on the basis of:
- a fuel consumption saving S*recov* provided thanks to the energy recovery system (30), corresponding to the values of the temperature of the exhaust gases Texh(t) and of the flow of the exhaust gases Q*exh*(t) determined in step a), and
- an overconsumption of fuel O*consu* associated with the implementation of the energy recovery system (30) for said optimum position of the bypass valve (33), corresponding to the values of the injected fuel flow rate Q*fuel(t),* of the inlet air flow rate Q*air*(t), and of the temperature of the exhaust gases Texh(t) determined in step a) and to the optimum position of the bypass valve (33);
c) positioning (300) said bypass valve (33) in said optimum position determined in step b).

2. Control method according to Claim 1, wherein the following sub-steps are performed in step b):
b1) at the moment t there is a comparison (201) of:
- the difference of the injected fuel flow rate ΔQ*fuel*(t) between the injected fuel flow rate Q*fuel(t)* determined at the moment t and the fuel flow Q*fuel*(t-Δt) determined at a previous moment t-Δt with a predetermined threshold value of the difference of the injected fuel flow rate ΔQ*fuel*_{threshold,} and/or
- the flow of the exhaust gases Q*exh*(t) with a predetermined threshold value of the flow of the exhaust gases Q*exh*_{threshold}, and/or
- the flow of the exhaust gases Q*exh*(t) with a predetermined maximum value of the flow of the exhaust gases Q*exh*ₘₐₓ, and/or
- the temperature of the exhaust gases Texh(t) with a predetermined maximum value of the temperature of the exhaust gases T*exh*ₘₐₓ, and
b2) said optimum position of the bypass valve (33) is determined on the basis of the result of the comparison of sub-step b1).

3. Control method according to Claim 2, wherein said optimum position of the bypass valve (33) determined in sub-step b2) is an open position in which the exhaust gases are routed entirely toward the exhaust duct (41), if the result of the comparison of sub-step b1) shows that at least one of the following conditions is confirmed at the moment t:
- the difference of the injected fuel flow rate ΔQ*fuel*(t) is greater than said threshold value of the difference of the injected fuel flow rate ΔQ*fuel*_{threshold}, and the flow of the exhaust gases Q*exh*(t) is greater than said threshold value of the flow of the exhaust gases Q*exh*_{threshold},
- the flow of the exhaust gases Q*exh*(t) is lower than said threshold value of the flow of the exhaust gases Q*exh*_{threshold},
- the flow of the exhaust gases Q*exh*(t) is greater than said maximum value of the flow of the exhaust gases Q*exh*ₘₐₓ,
- the temperature of the exhaust gases T*exh*(t) is greater than said maximum value of the temperature of the exhaust gases T*exh*ₘₐₓ.

4. Control method according to one of Claims 1 to 3, wherein, in step b) a sub-step of comparison (204) of the fuel consumption saving S*recov* with the fuel overconsumption O*consu* is performed.

5. Control method according to one of Claims 1 to 4, wherein in step b) the following sub-steps are performed:
b3) a maximum fuel overconsumption O*consu*_{EBPmax} is determined for a closed position of the bypass valve (33), in which the exhaust gases are routed entirely toward the bypass duct (31), and a maximum fuel consumption saving S*recov*_{EBPmax} is determined for this closed position of the bypass valve (33),
b4) the maximum fuel overconsumption O*consu*_{EBPmax} is compared with the maximum fuel consumption saving S*recov*_{EBPmax}, and
b5) the optimum position of the bypass valve (33) is determined as being the closed position when the result of the previous comparison shows that the maximum fuel overconsumption O*consu*_{EBPmax} is lower than the maximum fuel consumption saving S*recov*_{EBPmax} for this closed position of the bypass valve (33).

6. Control method according to Claim 5, wherein in sub-step b5), when the maximum fuel overconsumption O*consu*_{EBPmax} enforced by the bypass valve (33) in the closed position thereof is greater than the maximum fuel consumption saving S*recov*_{EBPmax} for the closed position of the bypass valve (33), the following sub-steps are performed:
b6) the following are determined:
- a first fuel overconsumption O*consu*_{EBP0}*,* corresponding to a first position of the bypass valve (33), this first fuel overconsumption O*consu*_{EBP0} being equal to the maximum fuel consumption saving S*recov*_{EBPmax} corresponding to the closed position of the bypass valve (33),
- a second fuel overconsumption O*consu*_{EBP0/2} corresponding to a second position of the bypass valve (33), for which the portion of the exhaust gases routed toward the bypass duct (31) is less than the portion of the exhaust gases routed toward this bypass duct (31) when the bypass valve (33) is in said first position, and
- a second fuel consumption saving S*recov*_{EBP0/2} obtained for this second position of the bypass valve (33),
b7) the second fuel overconsumption O*consu*_{EBP0/2} is compared with the second fuel consumption saving S*recov*_{EBP0/2}, and
b8) the optimum position of the bypass valve (33) is determined on the basis of the result of the comparison of sub-step b7).

7. Control method according to Claim 6, wherein in sub-step b8) the optimum position of the bypass valve (33) is determined as being the second position when, in sub-step b7), the comparison shows that the second fuel overconsumption O*consu*_{EBP0/2} is lower than the second fuel consumption saving S*recov*_{EBP0/2} for this second position of the bypass valve (33).

8. Control method according to Claim 6, wherein, the comparison of sub-step b7) having shown that the second fuel overconsumption O*consu*_{EBP0/2} is greater than the second fuel consumption saving S*recov*_{EBP0/2}*,* in sub-step b8) the following sub-steps are performed:
b9) the following are determined:
- a first net fuel consumption saving S*recov*_{EBP0}*-*O*consu*_{EBP0}*,* which is equal to the difference between a first fuel consumption saving S*recov*_{EBP0}, obtained when the bypass valve (33) is in the first position thereof, and said first fuel overconsumption O*consu*_{EBP0} enforced by the bypass valve (33) in this first position, and
- a second net fuel consumption saving S*recov*_{EBP0/2}*-*O*consu*_{EBP0/2}*,* which is equal to the difference between the second fuel consumption saving S*recov*_{EBP0/2} and the second fuel overconsumption O*consu*_{EBP0/2}*,*
b10) the first net fuel consumption saving S*recov*_{EBP0}-O*consu*_{EBP0} is compared with the second net fuel consumption saving S*recov*_{EBP0/2}*-*O*consu*_{EBP0/2}*,* and
b11) the optimum position of the bypass valve (33) is determined on the basis of the comparison of sub-step b10).

9. Control method according to Claim 8, wherein in sub-step b11) the optimum position of the bypass valve (33) is determined as being the second position when, in sub-step b10), the comparison shows that the first net fuel consumption saving S*recov*_{EBP0}-O*consu*_{EBP0} is lower than the second net fuel consumption saving S*recov*_{EBP0/2}-O*consu*_{EBP0/2}.

10. Control method according to one of Claims 1 to 3, wherein, in step b) said optimum position of the bypass valve (33) is determined at the moment t on the basis of the temperature Texh(t) and the flow Q*exh*(t) of the exhaust gases in accordance with a predefined mapping (91, 92, 93, 94) that gives, for each pair of values of the temperature Texh(t) and of the flow Q*exh*(t) of the exhaust gases belonging to a given temperature range and a given flow range, the corresponding predetermined optimum position of the bypass valve (33).
